# EUROPEAN PATENT APPLICATION

(11) **EP 4 496 379 A1**
(43) Date of publication of application: **22.01.2025**
(21) Application number: 23770480.4
(22) Date of filing: 03.03.2023
(51) Int. Cl.: H04W 28/06, H04W 72/0453, H04W 72/23, H04W 84/12

(54) **COMMUNICATION DEVICE AND COMMUNICATION METHOD**

(30) Priority: 18.03.2022 JP 2022044112
(71) Applicant: Panasonic Intellectual Property Corporation of America, Torrance, CA 90504 (US)
(72) Inventor: IWAI, Takashi, Kadoma-shi, Osaka 571-0057 (JP); TAKATA, Tomofumi, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2023/008134
(87) International publication number: WO 2023/176523

(57) **Abstract**

A communication device according to the present invention comprises: a control circuit that generates a control signal in which first information indicating the type of a response signal is configured in a first field and second information corresponding to the first information is configured in a second field; and a transmission circuit that transmits the control signal.

## Description

### Technical Field

The present disclosure relates to a communication apparatus and a communication method.

### Background Art

In the Institute of Electrical and Electronics Engineers (IEEE), standard IEEE 802.11be (hereinafter also referred to as "11be") that is the subsequent standard of standard IEEE 802.11ax (hereinafter also referred to as "11ax") and is for next-generation wireless local area network (Local Area Network: LAN) is being studied. For example, IEEE 802.11ax is also called High Efficiency (HE), and IEEE 802.11be is also called Extremely High Throughput (EHT). In addition, a subsequent standard of 1 1be, which aims for further Low latency and improvement of throughput, is also being studied (see, for example, NPL 1).

### Citation List

### Non-Patent Literature

NPL 1
   IEEE P802.11-22 /0032r0, "Thoughts on Next Generation After 802.11be"
NPL 2
   IEEE 802.11-21/1333r4, "CC36 CR for Trigger frame on Common Info field format"
NPL 3
   IEEE 802.11-21/0259r4, "Proposed Draft Specification for Trigger frame for EHT"
NPL 4
   IEEE P802.1ax /D8.0
NPL 5
   IEEE 802.11-20/1672r2, "UL Beamforming for TB PPDUs in 11be"

### Summary of Invention

### Technical Problem

In the standard for next-generation wireless LAN, one communication apparatus (for example, a terminal) transmits a response signal in response to specification by a control signal received from the other communication apparatus (for example, an access point (AP)).

However, there is room for study on generation of a control signal that appropriately specifies the type of a response signal.

The non-limiting examples of the present disclosure provide a communication apparatus and a communication method that are capable of generating a control signal that appropriately specifies the type of a response signal.

A communication apparatus according to one example of the present disclosure includes: a control circuit that generates a control signal in which first information indicating a type of a response signal is configured in a first field, and second information according to the first information is configured in a second field; and a transmission circuit that transmits the control signal.

It should be noted that general or specific embodiments may be implemented as a system, an apparatus, a method, an integrated circuit, a computer program, a storage medium, or any selective combination thereof.

According to an example of the present disclosure, it is possible to generate a control signal that appropriately specifies the type of a response signal.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a chart illustrating an example of Common Info field (Common Info field, EHT variant);
FIG. 2 is a chart illustrating an example of User Info field (User Info field, EHT variant);
FIG. 3 is a chart illustrating an example of Special User Info field;
FIG. 4 is a table illustrating an example of Trigger Type;
FIG. 5 is a chart illustrating an example of User Info field;
FIG. 6 is a figure illustrating transmission antenna switching of a terminal with 1 transmission, 4 receptions;
FIG. 7 is a figure illustrating an example of NDP transmission from two terminals;
FIG. 8A is a block diagram illustrating a configuration example of part of AP according to an example of the present disclosure;
FIG. 8B is a block diagram illustrating a configuration example of part of a terminal according to an example of the present disclosure;
FIG. 9 is a block diagram illustrating a configuration example of AP according to an embodiment;
FIG. 10 is a block diagram illustrating a configuration example of a terminal according to an embodiment;
FIG. 11 is a table illustrating an example of Trigger Type;
FIG. 12 is a table illustrating an example of an NDP type information specification method;
FIG. 13 is a table illustrating an example of an NDP type information specification method;
FIG. 14 is a table illustrating an example of alternate interpretation of Number Of HE/EHT-LTF symbols subfield;
FIG. 15 is a figure illustrating an example of NDP transmission for Sounding;
FIG. 16 is a chart illustrating an example of alternate interpretation of Reserved subfield of User Info field;
FIG. 17 is a figure illustrating an example of Localized allocation and Distributed allocation;
FIG. 18 is a table illustrating an example of notification of Tone interval of Distributed allocation;
FIG. 19 is a chart illustrating an example of alternate interpretation in User Info field;
FIG. 20 is a table illustrating an example of notification of the number of repetitions;
FIG. 21 is a chart illustrating an example of repetition transmission;
FIG. 22 is a chart illustrating an example of frequency hopping;
FIG. 23 is a chart illustrating an example of transmission antenna switching;
FIG. 24 is a table illustrating an example of notification of LTF generation sequence;
FIG. 25 is a table illustrating an example of notification of ZC sequence number and cyclic-shift amount;
FIG. 26 is a table illustrating an example of notification of NDP type by trigger type;
FIG. 27 is a table illustrating an example of notification of NDP version;
FIG. 28 is a chart illustrating an example of Joint NDP transmission; and
FIG. 29 is a table illustrating an example of a combination of NDP type.

### Description of Embodiments

Hereinafter embodiments of the present disclosure will be described in detail with reference to the drawings.

### (Embodiment)

As described above, in IEEE, 11be that is the subsequent standard of 11ax is being studied, and the subsequent standard of 11be is also being studied (see, for example, NPL 1). Hereinafter, in this embodiment, the subsequent standard of 11be is referred to as EHTplus.

In HE, introduction of uplink OFDMA (Orthogonal Frequency-Division Multiple Access) has been stipulated. Access Point (also referred to as AP or "base station") transmits a control signal (hereinafter referred to as "Trigger frame") that specifies transmission of uplink OFDMA signal to a plurality of terminals (also referred to as STA: Station or "non-AP STA") stored by the AP. Note that a terminal that supports HE and/or a terminal compliant with HE may be referred to as an HE terminal.

Also, in EHT, as a control signal for specifying transmission of uplink OFDMA signal to a plurality of terminals, reuse of Trigger frame of HE is agreed (see, for example, NPL 2). Note that a terminal that supports EHT and/or a terminal compliant with EHT may be referred to as an EHT terminal.

Similarly, in EHTplus also, as a control signal for specifying transmission of an uplink signal to a plurality of terminals, Trigger frame may be reused. Note that a terminal that supports EHTplus and/or a terminal compliant with EHTplus may be referred to as an EHTplus terminal.

Although a description will be given below with an example of a control signal that specifies to a plurality of terminals, the present disclosure is not limited to this. The control signal may be specified to one terminal instead of a plurality of terminals. Although a description will be given below with an example in which a plurality of terminals each transmit a signal (response signal) based on the control signal, the present disclosure is not limited to this. The number of terminals that transmit a response signal based on the control signal may be one.

In addition to MAC header, Trigger frame includes Common Info field, User Info List, and Special User Info field (see, for example, NPLs 2, 3). Common Info field includes information in common between a plurality of terminals for OFDMA multiplexing. User Info List includes a plurality of User Info fields. User Info field includes specific information to each terminal. Special User Info field includes common information for EHT terminals. Special User Info field may include common information for EHTplus terminals.

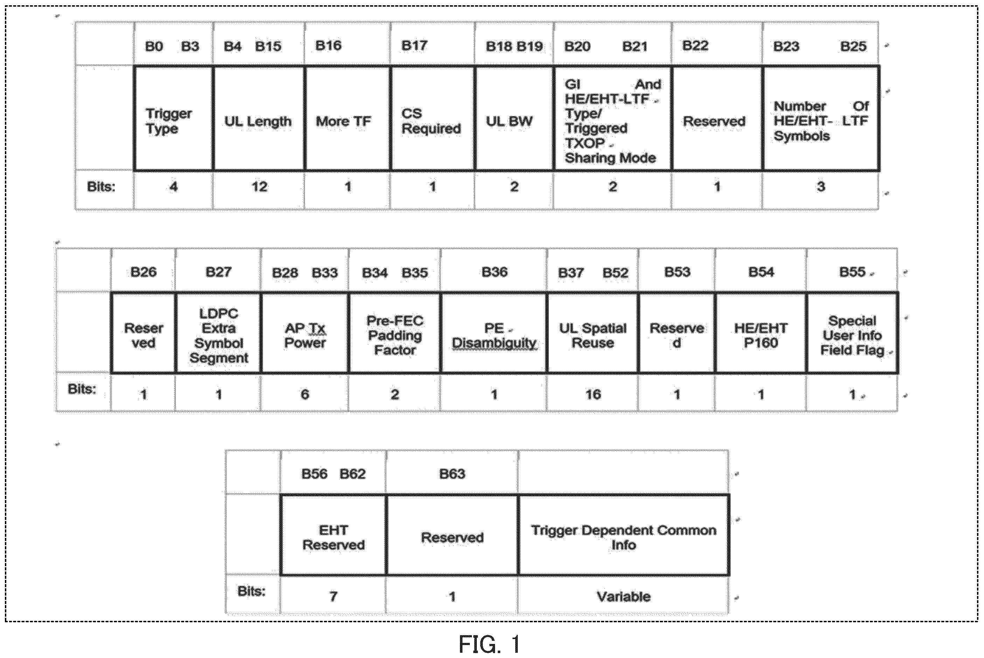

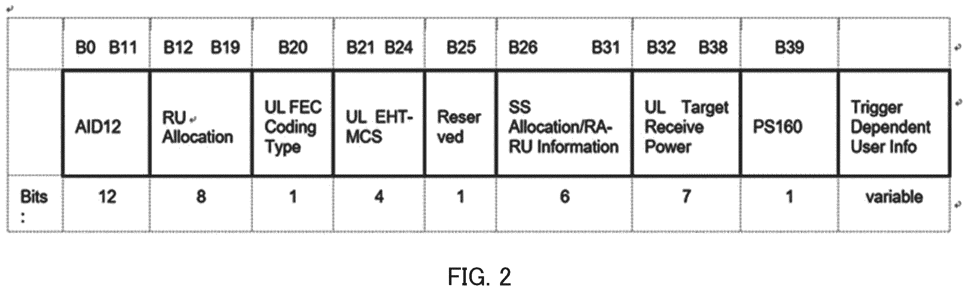

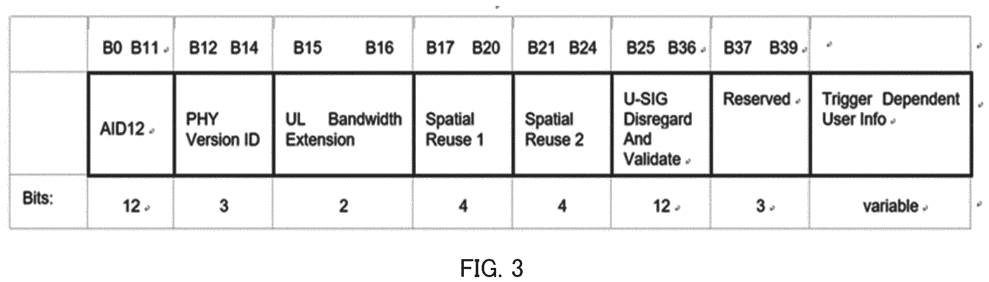

FIG. 1 is a chart illustrating an example of Common Info field (Common Info field, EHT variant). FIG. 2 is a chart illustrating an example of User Info field (User Info field, EHT variant). FIG. 3 is a chart illustrating an example of Special User Info field. FIG. 1, FIG. 2, and FIG. 3 each illustrate a configuration example that is being studied in EHT (see, for example, NPLs 2, 3).

When Trigger frame is transmitted to EHT terminal, Special User Info field may be provided. Special User Info field is a field in which special AID (Association ID, e.g., AID = 2007) is configured in User info field. In Special User Info field, common information for terminals, such as uplink bandwidth information for EHT terminals, is notified. In EHTplus also, similar to EHT, it is expected that Special User Info field will be used for notifying common information for EHTplus terminals using a special AID (e.g., AID = 2006) for EHTplus terminals.

Trigger Type subfield of Common Info field includes information that specifies the type of Trigger frame. The type of Trigger frame may be the type of a signal that AP causes a terminal to transmit.

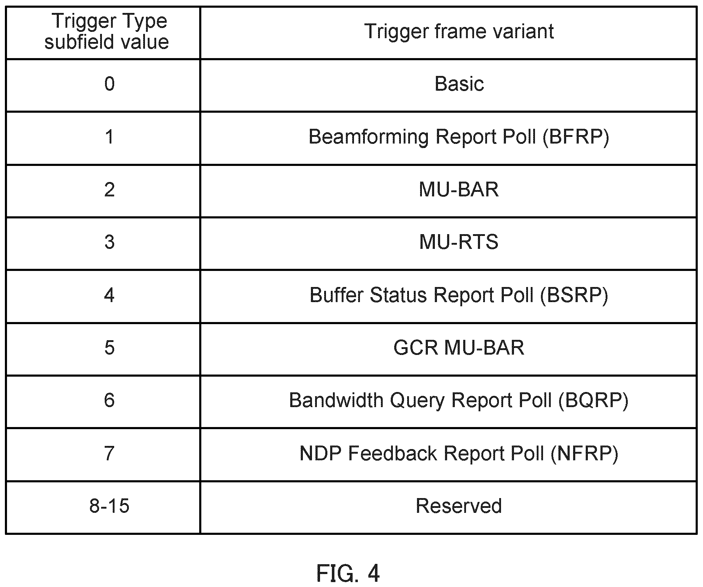

FIG. 4 is a table illustrating an example of Trigger Type. In FIG. 4, a correspondence relationship between the value (Trigger Type subfield value of FIG. 4) of Trigger Type subfield, and the type (Trigger frame variant of FIG. 4) of Trigger frame, indicated by the value is illustrated in a table format. In HE, the types shown in FIG. 4 are defined as Trigger Type (NPL 4). Trigger Dependent Common Info subfield (see, for example, FIG. 1) includes common information depending on Trigger Type.

For example, as illustrated in FIG. 4, when the value of Trigger Type subfield of Common Info field is configured to 7, Trigger Type subfield indicates that Trigger Type is NDP Feedback Report Poll (NFRP). User Info field in this case will be described.

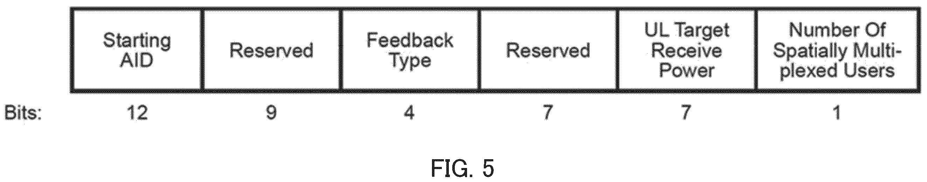

FIG. 5 is a chart illustrating an example of User Info field. When Trigger Type is NDP Feedback Report Poll (NFRP), the format of User Info field has the configuration exemplified in FIG. 5 (see, for example, NPL 4). Note that hereinafter Trigger frame for which Trigger Type is configured to NFRP may be written as NFRP Trigger frame.

In FIG. 5, when the value of Feedback Type subfield is configured to 0, this indicates an operation for specifying a response by application in Resource request (RR) to the terminal. Note that, in the value of Feedback Type subfield, the value other than 0 (e.g., the value from 1 to 15) is Reserved.

Using an NFRP Trigger frame, the AP can be notified via a response signal to the Trigger frame whether a terminal holds data to be transmitted in uplink. For example, when receiving an NFRP Trigger frame, the terminal may notify the AP of information using a response signal to the NFRP Trigger frame, the information indicating whether the terminal holds data to be transmitted in uplink.

At most 18 terminals per 20 MHz specified by Starting AID subfield transmit NDPs (null data packets) including no data as response signals to an NFRP Trigger frame. NDP is an example of a signal including no data (or a signal not accompanied by data), as well as an example of a response signal to Trigger frame. Note that when spatial multiplexing is applied, at most 36 terminals may transmit NDPs including no data as response signals to NFRP Trigger frame.

Hereinafter, to transmit NDP may be written as NDP transmission, and to receive NDP may be written as NDP reception. In addition, a signal including NDP may be written as an NDP signal, and an NDP signal received may be written as an NDP reception signal.

For example, based on whether data greater than or equal to a predetermined threshold is held by a terminal, the terminal transmits NDP for which HE-LTF (High Efficiency-long training field) symbol, or EHTLTF (Extremely High Throughput long training field) symbol is allocated at a predetermined tone position corresponding to the AID of the terminal.

Also, in EHT, to perform uplink beamforming control, introduction of Trigger frame to specify NDP transmission to a terminal is being studied (for example, NPL 5). In this case, the terminal performs NDP transmission for application of performing uplink beamforming control.

As described above, transmission of NDP for multiple applications is being studied. However, there is room for study on the format of Trigger frame for appropriately specifying NDP transmission for multiple applications. For example, there is room for study on Trigger frame to specify appropriate NDP transmission to a plurality of terminals with less overhead depending on the application.

In this embodiment, NDP transmission has various applications, thus we focused on the fact that in specifying NDP transmission from AP to a terminal, it is necessary to appropriately specify the NDP transmission depending on the application. For example, the AP determines the application in NDP transmission, generates a control signal (Trigger frame) according to the determined application in NDP transmission, and transmits the control signal to the terminal. The terminal performs NDP transmission for the specified application based on the control signal.

In addition to Resource request application introduced by HE, the multiple applications in the NDP transmission include e.g., application in channel quality estimation (Sounding) of uplink and/or downlink transmission beamforming of MIMO (multiple-input and multiple-output), and application in channel quality estimation (Sounding) of a predetermined band for uplink link adaptation. In addition, the application in the NDP transmission may include application in received beamforming control, and application in transmission antenna switching. The quality estimation of channel may be replaced by quality measurement of channel.

In the NDP transmission for Sounding application in uplink transmission beamforming of MIMO, the AP calculates a frequency response in uplink channel from the NDP reception signal, performs a process such as singular value decomposition on the frequency response, and calculates a transmission precoding matrix to be applied to uplink data signals. The AP notifies the terminal of the calculated precoding matrix. The terminal applies the notified precoding matrix to the data transmission after reception of the notification, thereby improving the uplink throughput performance.

In the NDP transmission for Sounding application in downlink transmission beamforming of MIMO, the AP utilizes up and down reversibility of a radio propagation path in TDD (time division duplex), and estimates a frequency response of downlink channel from the NDP reception signal. The AP then calculates a transmission precoding matrix to be applied to downlink data signals. The AP applies the calculated transmission precoding matrix to the data transmission after calculation of the precoding matrix, thereby improving the downlink throughput performance.

In the NDP transmission for Sounding application in uplink link adaptation, the AP calculates the reception quality (for example, SINR (Signal-to-Interference plus Noise Ratio)) of uplink channel from the NDP reception signal. Based on the calculated reception quality, the AP calculates link adaptation information such as an allocated band (for example, RU (resource unit) number) to be applied to uplink data signals, the number of streams, MCS (modulation and coding scheme) (for example, a data modulation system, and an encoding rate), and transmitted power. AP notifies the terminal of the calculated link adaptation information, and the terminal applies the notified link adaptation information to data transmission, thereby improving the uplink throughput performance.

In the NDP transmission for application in received beamforming control, AP receives NDP reception signals using a plurality of different reception analog beams, and calculates the reception quality for each beam. AP determines a reception analog beam to achieve the best reception quality for each terminal, and applies the best reception quality to the data reception from each terminal after the determination, thereby improving the uplink throughput performance.

In the NDP transmission for application in transmission antenna switching, AP calculates the reception quality of the NDP reception signals transmitted from the plurality of different transmission antennas. The AP determines a transmission antenna to achieve the best reception quality for each terminal, and in the data transmission to the terminal after the determination, instructs each terminal to apply the best transmission antenna, thus the uplink throughput performance can be improved.

Here, the transmission antenna switching is assumed to be performed by a terminal to make downlink channel quality estimation for downlink MIMO transmission, the terminal having different numbers of transmission antennas and reception antennas that can be simultaneously processed.

The terminal having different numbers of transmission antennas and reception antennas that can be simultaneously processed is, for example, a terminal having a smaller number of transmission antennas.

Note that the configuration of the number of transmission antennas and the number of reception antennas may be defined as Capability information on terminal. The configuration of the number of transmission antennas and the number of reception antennas may be shared between the terminal and the AP in advance by the terminal transmitting the Capability information to the AP.

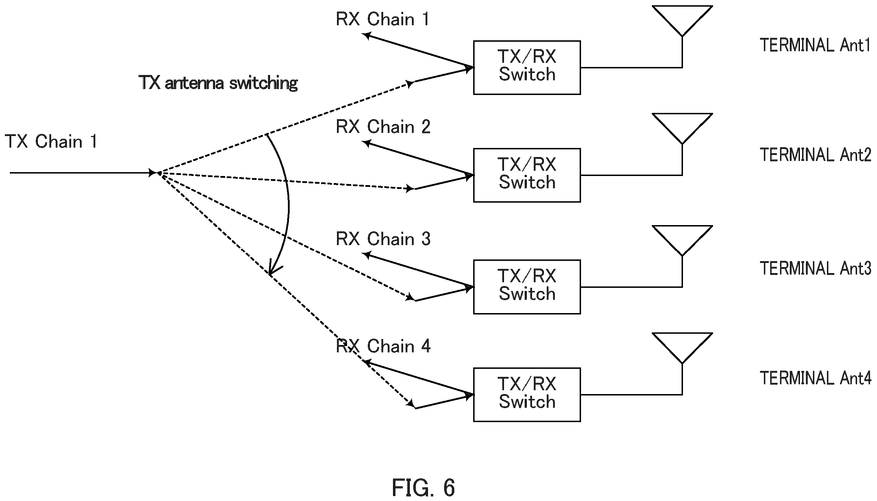

FIG. 6 is a figure illustrating transmission antenna switching of a terminal with 1 transmission, 4 receptions. Note that 1 transmission indicates that the number of transmission antennas is 1, and 4 receptions indicates that the number of reception antennas is 4. Hereinafter 1 transmission, 4 receptions is written as 1T4R.

As illustrated in FIG. 6, in a terminal with the number of transmission antennas less than the number of reception antennas, the transmission antenna to perform NDP transmission is switched timewise. Thus, the terminal can select a transmission antenna with the best uplink throughput performance. In an environment for which the reversibility of uplink and downlink channel characteristics can be assumed as in TDD, in a terminal with the number of transmission antennas less than the number of reception antennas, the transmission antenna to perform NDP transmission is switched timewise. The AP can estimate a frequency response from the signal by which each NDP is received, and calculate a transmission precoding matrix to be applied to downlink data transmission, thus the downlink throughput performance is improved.

As exemplified above, various applications are present in the NDP transmission, and it is desirable that an appropriate transmission method be applied according to the application.

For example, when the NDP transmission is application in Resource request, each of the plurality of terminals may notify of information related to the presence or absence of data by NDP transmission. Thus, it is sufficient that the NDP signal from the terminal be transmitted by Tone allocation relatively sparsely arranged, and the NDP signal may not be transmitted in a broadband (for example, by Tone allocation densely arranged).

On the other hand, when the NDP transmission is application in quality estimation (Sounding) for MIMO application, in order to obtain a beamforming gain and/or a scheduling gain, it is desirable that the NDP signal from the terminal be transmitted by Tone allocation arranged densely in a broadband. A desired estimation accuracy is obtained by making the Tone allocation dense.

The NDP transmission not accompanied by data is an overhead for the throughput performance of a system, thus NDP transmission from the plurality of terminals is efficiently controlled.

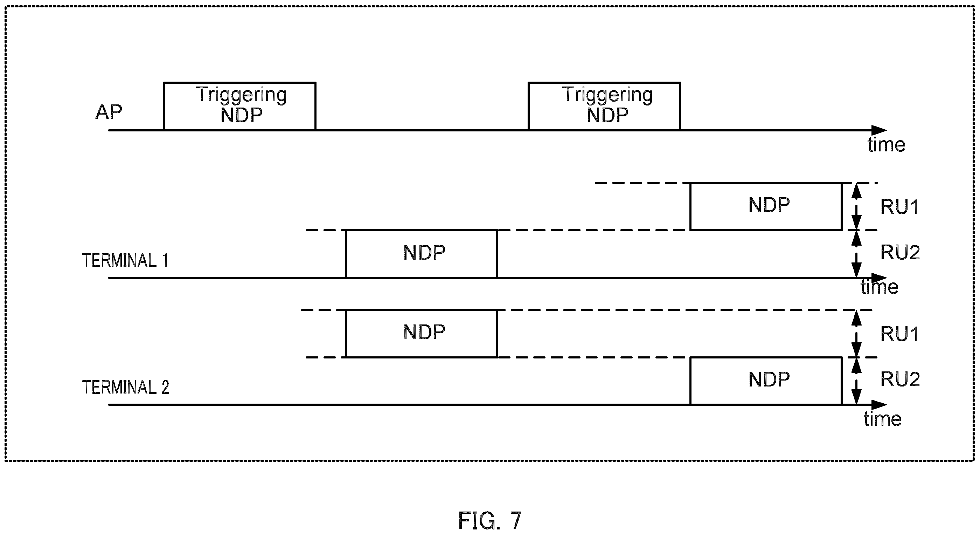

FIG. 7 is a figure illustrating an example of NDP transmission from two terminals. FIG. 7 illustrates an example of a signal each transmitted by the AP, terminal 1 and terminal 2. The horizontal axis of each of the AP, terminal 1 and terminal 2 in FIG. 7 indicates time axis. For example, as in FIG. 7, when the AP specifies, to each of terminal 1 and terminal 2, NDP transmission in Sounding band including RU1 and RU2, terminal 1, and terminal 2 transmit NDP in RU1 and RU2, respectively. Here, when the spatial multiplexing number of EHT-LTF symbol serving as a known reference signal is limited between the AP and the terminals, a plurality of NDP signals need to be frequency-multiplexed. In order to frequency-multiplex a plurality of NDP signals, as illustrated in FIG. 7, control using multiple (two in FIG. 7) Trigger frames is necessary, thus the overhead increases.

In this manner, by a transmission method necessary to obtain a desired effect according to various applications mentioned above, Trigger frame that specifies NDP transmission efficiently (with less overhead) is called for.

Note that in the following, illustratively, the AP specifies NDP transmission to the terminal using Trigger frame (an example of a control signal), the NDP transmission being determined from multiple types of NDP transmission.

The multiple types of NDP transmission may be associated with multiple applications of NDP. Alternatively, the multiple types of NDP transmission may correspond to multiple NDP transmission methods. The multiple NDP transmission methods may include methods which are different from each other in at least one of a band to transmit NDP, an allocation method for a signal (for example, a symbol) included in NDP, an NDP transmission procedure, switching of the antenna to transmit NDP, and information indicated by NDP. Note that the "multiple types of NDP transmission" may be replaced by "multiple types of NDP". Note that each type included in the multiple types of NDP may be referred as an NDP type. Also, information indicating NDP type may be written as NDP type information.

Specifying NDP transmission may be understood as specifying an NDP to be transmitted, or specifying an NDP type. Note that specifying NDP transmission may be equivalent to notifying of information that specifies NDP transmission, and providing information that specifies NDP transmission. The information that specifies NDP transmission may be replaced by information that indicates NDP transmission. Information that specifies an NDP type may be replaced by information that indicates an NDP type.

### [Configuration of Radio Communication System]

A radio communication system according to this embodiment may include e.g., AP 100 and terminal 200. For example, AP 100 may have both functions of Sharing AP and Shared AP, or may have either one of the functions.

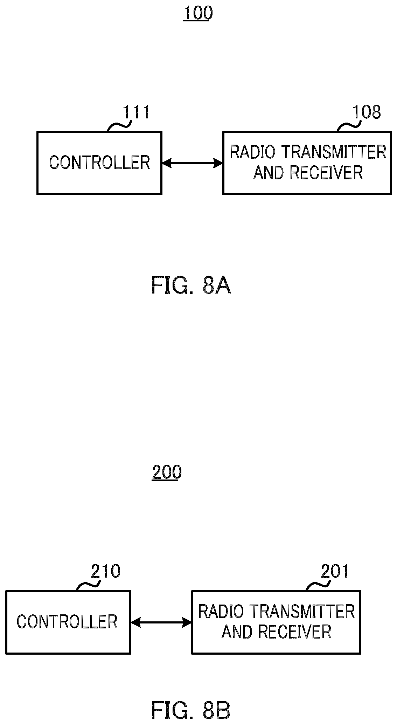

FIG. 8A is a block diagram illustrating a configuration example of part of AP 100 according to an example of the present disclosure. FIG. 8B is a block diagram illustrating a configuration example of part of terminal 200.

AP 100 illustrated in FIG. 8A is an example of a communication apparatus. In AP 100 illustrated in FIG. 8A, controller 111 (corresponding to a control circuit) generates a control signal (e.g., Trigger frame) in which first information (e.g., NDP type information) indicating the type of a response signal (e.g., an NDP) is configured in a first field, and second information according to the first information is configured in a second field. Radio transmitter and receiver 108 (corresponding to e.g., a transmission circuit) transmits the control signal.

Terminal 200 illustrated in FIG. 8B is an example of a communication apparatus. In terminal 200 illustrated in FIG. 8B, radio transmitter and receiver 201 (corresponding to e.g., a reception circuit) receives a control signal (e.g., Trigger frame). Controller 210 (corresponding to e.g., a control circuit) generates a response signal (e.g., an NDP) based on the first information included in the first field of the control signal, and the second information included in the second field. The generated response signal is transmitted by radio transmitter and receiver 201 (corresponding to e.g., a transmission circuit).

Note that AP 100 may be referred to as a radio transmission apparatus. Terminal 200 may be referred to as a radio reception apparatus.

Illustratively, AP 100 transmits Trigger frame specifying NDP transmission to terminal 200. Terminal 200 receives Trigger frame, and transmits an NDP to AP 100 based on the specification by Trigger frame. The specification by Trigger frame may include specification of the resources to be used for the NDP transmission.

Terminal 200 may be one of EHT terminal or EHTplus terminal. AP 100 transmits Trigger frame to one or more terminals 200, and receives the NDPs transmitted from terminals 200. AP 100 separates, from received signals, the NDPs transmitted by terminals 200, based on information on the resources allocated to terminals 200, and performs a reception process according to the application in NDP.

AP 100 supports EHT and/or EHTplus. When AP 100 communicates with an EHTplus terminal, the AP as the communication partner of the EHTplus terminal supports EHTplus. Note that AP 100 may have backward compatibility. For example, AP 100 that supports EHTplus can communicate with an HE terminal and an EHT terminal in addition to an EHTplus terminal. For example, AP 100 that supports EHTplus can transmit Trigger frame to an HE terminal and an EHT terminal in addition to an EHTplus terminal, and can receive a response signal (e.g., an NDP) to the Trigger frame.

### [Configuration of AP]

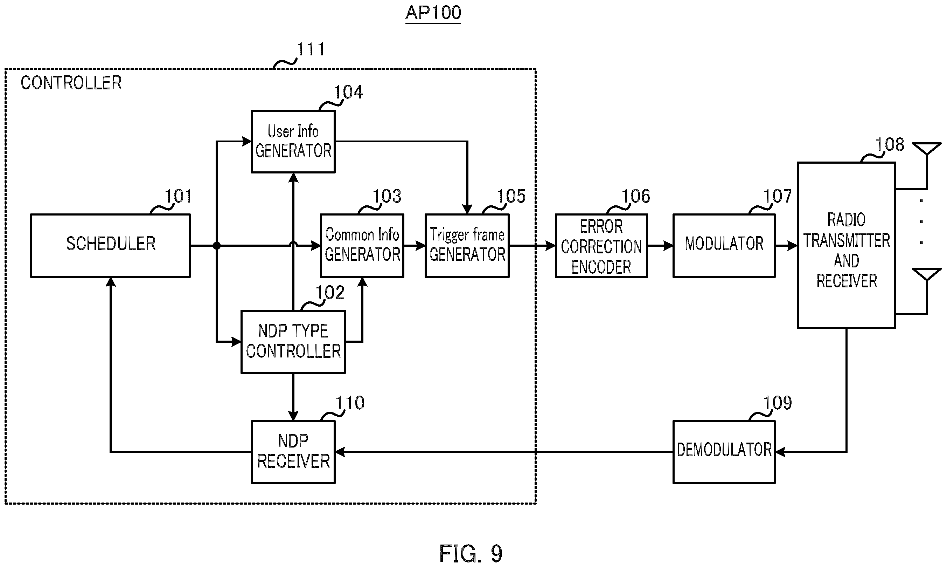

FIG. 9 is a block diagram illustrating the main configuration of AP 100 according to this embodiment. AP 100 generates Trigger frame that specifies the NDP transmission of application determined from multiple applications to terminal 200, and transmits the Trigger frame to terminal 200. AP 100 includes scheduler 101 , NDP type controller 102, Common Info generator 103, User Info generator 104, Trigger frame generator 105, error correction encoder 106, modulator 107, radio transmitter and receiver 108, demodulator 109, and NDP receiver 110. Scheduler 101, NDP type controller 102, Common Info generator 103, User Info generator 104, Trigger frame generator 105, and NDP receiver 110 may be included in controller 111. Controller 111 performs access control of media access control (MAC).

Scheduler 101 determines an NDP type corresponding to an application at a timing for specifying NDP transmission, and outputs the NDP type to NDP type controller 102. In addition, scheduler 101 determines a terminal ID (Identification) that specifies NDP transmission, and radio resource information for NDP of the terminal, and outputs the determined information to Common Info generator 103 and User Info generator 104. The radio resource information for NDP of the terminal may include information on the band (allocated band) used for NDP transmission by the terminal, information on the sequence used for NDP transmission by the terminal, and information related to the number of LTF symbols used for NDP transmission by the terminal. When NDP transmission is specified for a plurality of terminals, the radio resource information for NDP of the terminal may include information on the band (allocated band), information on the sequence, and information related to the number of LTF symbols which are used for NDP transmission by each of the plurality of terminals.

As described above, various applications are being studied as the application in NDP. For example, in the case of Resource request application, the AP specifies NDP transmission to the terminal in a predetermined cycle. In the case of application in MIMO, the AP specifies NDP transmission to the terminal in a predetermined cycle and/or at a timing when quality deterioration of the terminal is determined to be severe. When quality deterioration of the terminal is severe refers to, for example, when the reception error rate is higher than or equal to a threshold value, or when quality information fed back from the terminal to the AP indicates a predetermined level or lower.

When NDP transmission is specified by scheduler 101, NDP type controller 102 outputs, to User Info generator 104, and Common Info generator 103, format information indicating the formats of predetermined Common Info field, User Info field and Special User Info field which correspond to pre-defined NDP types. Note that the format information includes the size of each subfield included in the fields, and information indicating the interpretation (meaning) of bit information included in each subfield.

User Info generator 104 uses format information indicating the formats of predetermined User Info field and Special User Info field which correspond to the NDP type input from NDP type controller 102, and converts the terminal ID and/or the radio resource information for NDP input from scheduler 101 to predetermined bit information. User Info generator 104 generates User Info field and Special User Info field which include the converted bit information, and outputs the fields to Trigger frame generator 105.

Common Info generator 103 uses format information indicating the format of predetermined Common Info field corresponding to the NDP type input from NDP type controller 102, and converts the radio resource information for NDP input from scheduler 101 to predetermined bit information. Common Info generator 104 then generates Common Info field including the converted bit information, and outputs the Common Info field to Trigger frame generator 105.

Trigger frame generator 105 generates Trigger frame including Common Info field output from Common Info generator 103, Special User Info field output from User Info generator 104 and User Info List comprised of User Info fields of a plurality of terminals. MAC header, Padding, FCS (frame check sequence) may be added to the generated Trigger frame, in addition to Common Info field, Special User Info field and User Info List. The generated Trigger frame is output to error correction encoder 106.

Error correction encoder 106 receives e.g., transmission data signal including Trigger frame as input, error-correction encodes the input signal, and outputs the encoded signal to modulator 107.

Modulator 107 performs a modulation process on e.g., the signal input from error correction encoder 106, and outputs data signal after being modulated to radio transmitter and receiver 108.

Note that when the data signal after being modulated is an orthogonal frequency division multiplexing (OFDM) signal, a transmission signal process according to the OFDM may be performed in AP 100. For example, AP 100 (e.g., modulator 107) may form an OFDM signal by mapping a modulated signal to predetermined frequency resources, performing inverse fast Fourier transform (IFFT) process to convert into a time waveform, and adding a cyclic prefix (CP) to the time waveform.

Radio transmitter and receiver 108 performs predetermined radio transmission processes, such as D/A (digital-to-analog) conversion and up-convert to the carrier frequency, on the modulated signal output from modulator 107, and transmits the signal after undergoing the radio transmission processes to terminal 200 via an antenna. Radio transmitter and receiver 108 receives the signal transmitted from terminal 200 via an antenna, and performs predetermined radio reception processes, such as down-convert to the baseband and A/D (analog-to-digital) conversion, on the received signal, and outputs the signal after undergoing the radio reception processes to demodulator 109.

Demodulator 109 performs a demodulation process on e.g., an input signal, and outputs an obtained NDP reception signal to NDP receiver 110. Note that when the input signal is an OFDM signal, a reception signal process related to the OFDM may be performed in AP 100. For example, the AP (e.g., the demodulator) may perform a CP removal process, and a fast Fourier transform (FFT) process.

NDP receiver 110 performs a reception process on e.g., the NDP signal input from demodulator 109, and outputs a result of the reception process to scheduler 101, the reception process corresponding to an NDP type input from NDP type controller 102.

For example, when the application in NDP is Resource request application, NDP receiver 110 determines the presence or absence of transmission resources (or transmission data) for each terminal based on the NDP signal. For example, NDP receiver 110 determines whether the reception level of the NDP signal is higher than or equal to a predetermined level, and based on a result of the determination, determines the presence or absence of transmission resources for each terminal. NDP receiver 110 outputs the determination result to scheduler 101. The determination result outputted may be referred to as Resource request information.

When the application in NDP is application in MIMO, based on the NDP signal, NDP receiver 110 determines the information (e.g., precoding matrix) used for a transmission process of MIMO. For example, NDP receiver 110 determines a frequency response of a propagation path channel from the NDP signal, performs a process such as singular value decomposition on the frequency response, and calculates a precoding matrix to be applied to uplink data signals or downlink data signals. NDP receiver 110 outputs the calculated precoding matrix to scheduler 101.

In the data transmission to the terminal after obtaining information from NDP receiver 110, scheduler 101 performs data transmission using the obtained information (e.g., the result (such as Resource request information and a precoding matrix) of processing to the NDP reception signal).

### [Configuration of Terminal]

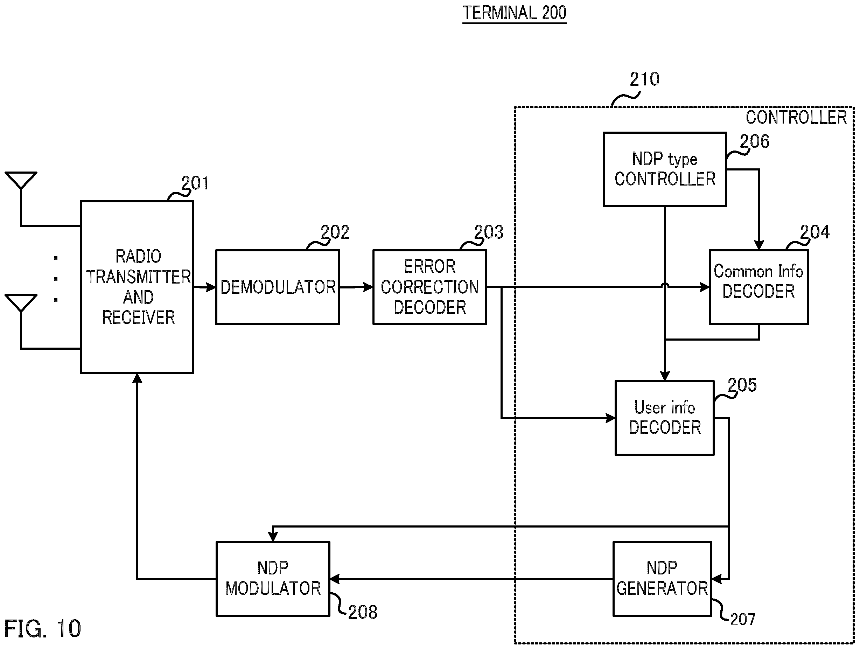

FIG. 10 is a block diagram illustrating a configuration example of terminal 200 according to this embodiment. Terminal 200 includes radio transmitter and receiver 201, demodulator 202, error correction decoder 203, Common Info decoder 204, User info decoder 205, NDP type controller 206, NDP generator 207, and NDP modulator 208. Note that Common Info decoder 204, User info decoder 205, NDP type controller 206, and NDP generator 207 may be included in controller 210. Controller 210 performs access control of MAC.

Radio transmitter and receiver 201 receives a reception signal by an antenna, and performs radio reception processes, such as down-convert and A/D conversion, on the reception signal, and outputs the obtained reception signal to demodulator 202.

Demodulator 202 performs a demodulation process on the received data input from radio transmitter and receiver 201, and outputs the demodulated signal to error correction decoder 203. Note that when the input signal is an OFDM signal, a reception signal process related to the OFDM may be performed in terminal 200. For example, terminal 200 (e.g., demodulator 202) may perform a CP removal process, and a FFT process.

Error correction decoder 203 decodes the demodulated signal input by demodulator 202, and outputs decoded signal as a received data signal. In addition, error correction decoder 203 outputs Trigger frame among the received data signal to Common Info decoder 204 and User info decoder 205.

NDP type controller 206 holds format information indicating the formats of predetermined Common Info field, User Info field and Special User Info field which correspond to NDP type. The format information held may be similar to e.g., the format information held in NDP type controller 102 of AP 100. NDP type controller 206 outputs the format information to Common Info decoder 204 and User info decoder 205.

Common Info decoder 204 extracts Common Info field from the Trigger frame output from error correction decoder 203. Common Info decoder 204 decodes terminal common information using the format information on Common Info field corresponding to an NDP type output from NDP type controller 206, and outputs the terminal common information to User info decoder 205.

User info decoder 205 extracts User Info List from the Trigger frame output from error correction decoder 203. The extracted User Info List includes one of more User Info fields, and one of more Special User Info fields. User info decoder 205 decodes terminal individual information using the terminal common information output from the Common Info decoder 204, and the format information on User Info field and Special User Info field corresponding to an NDP type output from NDP type controller 206, and outputs the terminal individual information to NDP generator 207 and NDP modulator 208. The terminal individual information may include the radio resource information for NDP. For example, the terminal individual information may include the radio resource information for NDP of each of the plurality of terminals.

NDP generator 207 generates an NDP signal based on the radio resource information input from User info decoder 205. For example, NDP generator 207 generates an NDP signal using predetermined sequence, number of LTF symbols, and P matrix as an orthogonal sequence which are indicated by the radio resource information. NDP generator 207 outputs the generated NDP signal to NDP modulator 208.

NDP modulator 208 performs a transmission signal process on the NDP signal input from NDP generator 207, based on the radio resource information for NDP input from User Info decoder 205. For example, NDP modulator 208 modulates the NDP signal by a predetermined modulation system, and allocates the modulated signal to a predetermined band (e.g., Tone). NDP modulator 208 outputs the modulated signal allocated to a predetermined band (e.g., Tone) to radio transmitter and receiver 209. Note that when the modulated signal is an OFDM signal, a transmission signal process according to the OFDM may be performed in terminal 200. For example, terminal 200 (e.g., NDP modulator 208) may form an OFDM signal by mapping the modulated signal to the frequency resources, performing an IFFT process, and adding CP.

Radio transmitter and receiver 201 performs radio transmission processes, such as up-convert and D/A conversion, on an input signal from NDP modulator 208, and transmits the signal after undergoing the radio transmission processes from an antenna.

AP 100 uses Trigger frame to specify NDP transmission to terminal 200, the NDP transmission corresponding to an NDP type determined from multiple types.

As described above, NDP type controller 102 of AP 100 holds the format information on predetermined Common Info field, User Info field and Special User Info field which correspond to an NDP type.

Hereinafter the Trigger frame format corresponding to multiple types of NDP transmission will be described.

### <First Example: Localized Allocation>

The multiple types of NDP include NFRP supported by HE. In addition, the multiple types of NDP includes MIMO (uplink/downlink transmission beamforming), channel quality estimation of a predetermined band for uplink link adaptation. The channel quality estimation may be written as Sounding. A frequency band as a target for channel quality estimation may be written as Sounding band. Also, NDP used for Sounding is referred to as NDP for Sounding, and transmitting NDP for Sounding may be referred to as NDP transmission for Sounding. Note that in the following description, specifying NDP transmission for Sounding is equivalent to specifying that the NDP to be transmitted is NDP for Sounding. The "specification of NDP transmission for Sounding" may be replaced by "specification of NDP for Sounding".

In the NDP transmission for Sounding, an allocation method may be applied by which an NDP signal of the terminal is allocated to predetermined Sounding band in RU unit (a set of multiple Tones). The RU corresponds to a set of multiple Tones. The method of allocating an NDP signal to RU unit (unit of a set of multiple Tones) may be written as Localized allocation. Note that allocation in Tone unit corresponds to allocation in a smallest allocation unit, and allocation in RU unit corresponds to allocation in a unit of a set of multiple smallest allocation units.

### <First Example of NDP Type Specification Method 1>

NDP transmission for Sounding is specified e.g., in Trigger Type subfield of Common Info field illustrated FIG. 1. For example, Sounding NDP is added to the types to be configured to Trigger Type subfield. NDP transmission for Sounding is specified by configuring information indicating Sounding NDP to Trigger Type of Common Info field.

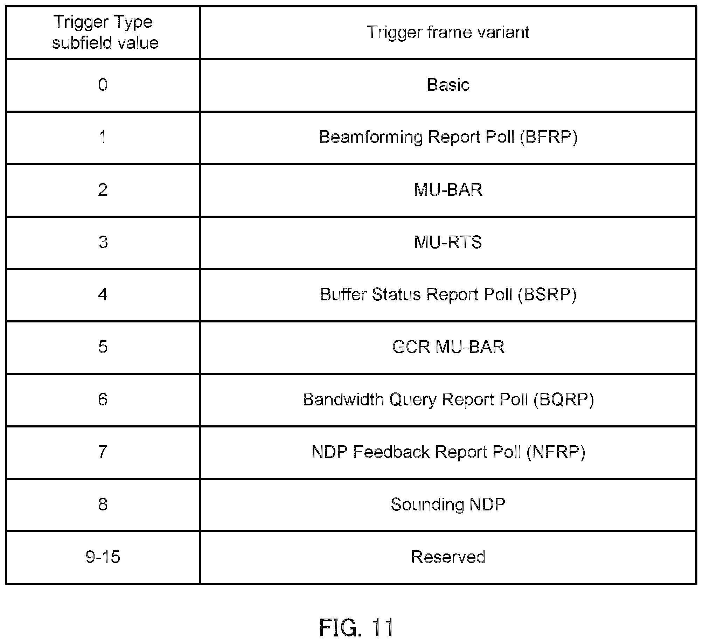

FIG. 11 is a table illustrating an example of Trigger Type. In FIG. 11, a correspondence relationship between the value ("Trigger Type subfield value") configured to Trigger Type subfield, and the type ("Trigger frame variant") indicated by the value is illustrated in a table format.

As illustrated in FIG. 11, NDP transmission for Sounding (" Sounding NDP" of FIG. 11) is added to the types to be configured to Trigger Type. Specifically, in FIG. 11, two NDP types are defined as the NDP type, that is, NDP Feedback Report Poll (NFRP) and NDP transmission for Sounding. In the example of FIG. 11, NDP transmission for Sounding is associated with the value 8 which is configured in Trigger Type subfield. According to the example of FIG. 11, when the value of Trigger Type subfield is configured to 8, NDP transmission for Sounding is specified to a plurality of terminals. When the value of Trigger Type subfield is configured to 8 is equivalent to when Trigger Type is NDP transmission for Sounding.

As described above, NDP transmission ("Sounding NDP" of FIG. 11) for Sounding is added to the types to be configured to Trigger Type, and Trigger frame including Trigger Type subfield which configures information specifying NDP transmission for Sounding is transmitted from the AP to the terminal, thereby making it possible for the AP to appropriately specify to the terminal that the type of NDP is NDP transmission for Sounding.

For example, in the example illustrated in FIG. 4, there is one type of NDP included in the types to be configured to Trigger Type, that is, "NDP Feedback Report Poll (NFRP)", however, in the example illustrated in FIG. 11, there are two types of NDP included in the types to be configured to Trigger Type. Consequently, the AP can select an NDP type to be requested to the terminal for transmission from two NDP types, thus can specify appropriate NDP transmission to the terminal. Although FIG. 11 illustrates an example in which NDP transmission for Sounding is specified in Trigger Type subfield of Common Info field, the present disclosure is not limited to this.

### <First Example of NDP Type Specification Method 2>

For example, NDP transmission for Sounding may be specified in a combination Common Info field, and a field different from Common Info field (e.g., User Info field and/or Special User Info field).

For example, NDP transmission for Sounding is specified in Trigger Type of Common Info field, and subfields in part of Special User Info field.

Illustratively, when the Trigger Type of Common Info field is Basic (when the value of Trigger Type subfield is configured to 0), subfields in part of Special User Info field are alternately interpreted as NDP type information. In this case, the type of NDP is specified in the subfields in part of Special User Info field.

Here, "alternately interpreted" may be replaced by "interpretation is changed", "content is changed", or "application is changed". For example, subfield A is alternately interpreted as information B may be equivalent to that subfield A is alternately interpreted as subfield B that configures information B. In other words, subfield A is alternately interpreted may be equivalent to that the content (or interpretation) of subfield A is changed, or equivalent to that subfield A is replaced by subfield B. Note that subfield A is alternately interpreted as information B when a condition X is satisfied may be equivalent to that subfield A is not alternately interpreted as information B when a condition X is not satisfied, or that information A different from information B is configured in subfield A.

An example will be described in which when Trigger Type is Basic, Trigger Dependent User Info subfield of Special User Info field is alternately interpreted as NDP type information. In other words, when Trigger Type is Basic, Trigger Dependent User Info subfield of Special User Info field is alternately interpreted as the subfield ("NDP type subfield") that indicates the NDP type information.

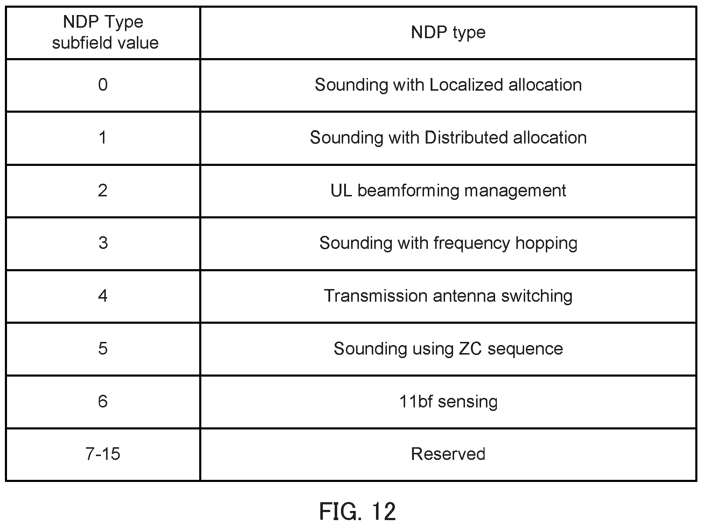

FIG. 12 is a table illustrating an example of an NDP type information specification method. In FIG. 12, when Trigger Type is Basic, a correspondence relationship between the value ("NDP type subfield value") configured to Trigger Dependent User Info subfield of Special User Info field, and the NDP type ("NDP type") indicated by the value is illustrated in a table format.

In FIG. 12, "Sounding with Localized allocation" is defined as the NDP type information. "Sounding with Localized allocation" indicates NDP transmission of Localized allocation for Sounding application.

When Trigger Type is Basic, one NDP type is specified from the NDP types defined in FIG. 12 by configuring the value of Trigger Dependent User Info subfield of Special User Info field based on FIG. 12.

When Trigger Type is Basic, in EHT, Trigger Dependent User Info subfield of Special User Info field is Reserved area which is an unused subfield. Thus, in EHT, no problem occurs even if Trigger Dependent User Info subfield is alternately interpreted as NDP type information.

For example, the AP transmits Trigger frame in which NDP type information is configured in Trigger Dependent User Info subfield of Special User Info field based on the example of FIG. 12, and the terminal obtains the NDP type information from Trigger Dependent User Info subfield included in the received Trigger frame. In this manner, Trigger Dependent User Info subfield of Special User Info field is alternately interpreted as the NDP type information as illustrated in FIG. 12, thus the type of NDP can be appropriately specified from the AP to the terminal. Thus, NDP transmission of a type selected from multiple types can be specified to the plurality of terminals.

For example, in the example illustrated to FIG. 4, there is one type of NDP included in the types to be configured to Trigger Type, however, in the example illustrated to FIG. 12, selection is made from multiple NDP types in Trigger Dependent User Info subfield of Special User Info field. Consequently, the AP can select an NDP type to be requested to the terminal for transmission, thus can specify appropriate NDP transmission to the terminal. The NDP types other than "Sounding with Localized allocation" which are illustrated in FIG. 12 will be described later as appropriate.

In the above, an example has been illustrated in which when Trigger Type of Common Info field is Basic (when the value of Trigger Type subfield is 0), the subfields in part of Special User Info field are alternately interpreted as NDP type information, however, the present disclosure is not limited to this.

### <First Example of NDP Type Specification Method 3>

For example, in the NDP transmission for Sounding, when Trigger Type of Common Info field is NFRP (when the value of Trigger Type subfield is configured to 7), the subfields in part of Special User Info field may be alternately interpreted as the NDP type information.

In the following, an example will be described in which when Trigger Type is NFRP, Reserved subfield of Special User Info field is alternately interpreted as the NDP type information.

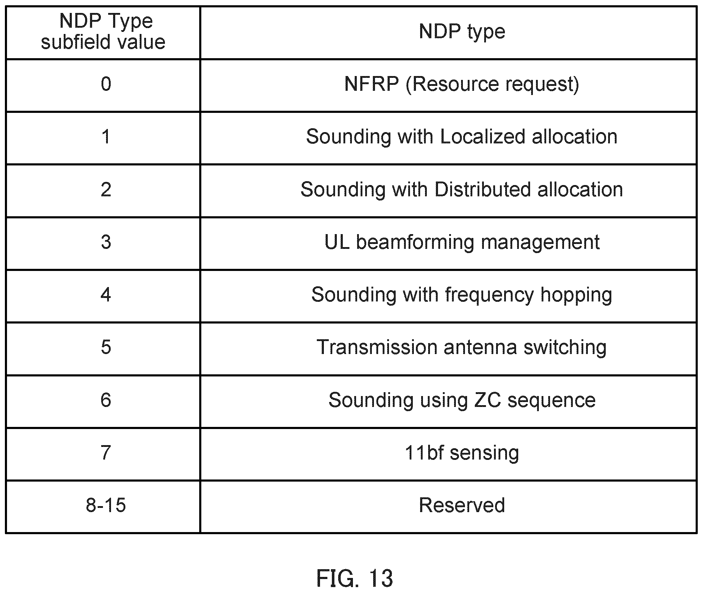

FIG. 13 is a table illustrating an example of an NDP type information specification method. In FIG. 13, when Trigger Type is NFRP, a correspondence relationship between the value ("NDP type subfield value") configured to Reserved subfield of Special User Info field, and the NDP type ("NDP type") indicated by the value is illustrated in a table format.

In FIG. 13, NDP type information similar to that in FIG. 12 is defined. However, in FIG. 13, the value configured to Trigger Dependent User Info subfield corresponding to NDP type is different from the value in FIG. 12. FIG. 13 differs from FIG. 12 in that NFRP (Resource request) is defined.

When Trigger Type is NFRP, Reserved subfield of Special User Info field is alternately interpreted as NDP type information (e.g., "NDP Type subfield"). For example, when Trigger Type is NFRP, original NDP transmission for NFRP is specified by configuring the value of NDP Type subfield to 0. In contrast, when Trigger Type is NFRP, NDP transmission of Localized allocation for Sounding application is specified by configuring the value of NDP Type subfield to 1.

When Trigger Type is NFRP, in EHT, Trigger Dependent User Info subfield of Special User Info field is not present.

For example, Trigger frame is transmitted in which NDP type information is configured in Reserved subfield of Special User Info field based on the example of FIG. 13, and the terminal obtains the NDP type information from Reserved subfield included in the received Trigger frame. In this manner, Reserved subfield of Special User Info field is alternately interpreted as the NDP type information as illustrated in FIG. 13, thus the type of NDP can be appropriately specified to the terminal by the AP. Thus, NDP transmission in application selected from multiple applications can be specified to the plurality of terminals.

For example, in the example illustrated in FIG. 4, there is one type of NDP included in the types to be configured to Trigger Type, however, in the example illustrated in FIG. 13, selection is made from multiple NDP types in Trigger Dependent User Info subfield of Special User Info field. Consequently, the AP can select an NDP type to be requested to the terminal for transmission, thus can specify appropriate NDP transmission to the terminal. The NDP types other than "Sounding with Localized allocation" which are illustrated in FIG. 13 will be described later as appropriate.

Without being limited to the above-described examples, subfields in part of Special User Info field, which are unused in HE and/or EHT or unused in NDP transmission, may be used for notification of NDP type.

### <First Example of Terminal Common Information Specification Method according to NDP Type>

The terminal common information (e.g., the number of EHT-LTF symbols) for NDP transmission for Sounding is specified by e.g., Number Of HE/EHT-LTF symbols subfield of Common Info field. In the following, illustratively, an example will be shown in which the terminal common information is the number of EHT-LTF symbols.

When NDP transmission for Sounding is specified, the information indicated by "Number Of HE/EHT-LTF symbols subfield" is interpreted differently from when another NDP type (e.g., NDP for Resource request by NRFP Trigger frame) is specified. In other words, Number Of HE/EHT-LTF symbols subfield when NDP transmission for Sounding is specified has different interpretation from the interpretation when another NDP type (e.g., NDP for Resource request by NRFP Trigger frame) is specified.

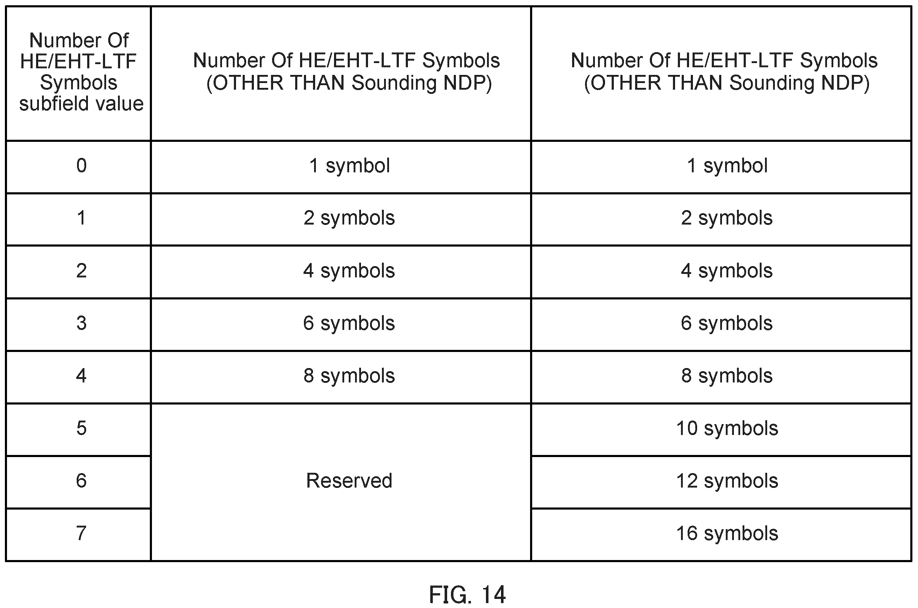

FIG. 14 is a table illustrating an example of alternate interpretation of Number Of HE/EHT-LTF symbols subfield. In FIG. 14, a correspondence relationship between the value of Number Of HE/EHT-LTF symbols subfield and the number of the symbols when NDP transmission for Sounding is specified (in the case of "Sounding NDP") and a correspondence relationship between the value of Number Of HE/EHT-LTF symbols subfield and the number of the symbols when an NDP type other than NDP transmission for Sounding is specified (in the case of "other than Sounding NDP") are illustrated in a table format.

As illustrated in FIG. 14, when NDP transmission for Sounding is specified, the upper limit of the configured value of the number of EHT-LTF symbols is increased. In FIG. 14, illustratively, when an NDP type other than NDP transmission for Sounding is specified, the upper limit of the configured value of the number of EHT-LTF symbols is 8, whereas when NDP transmission for Sounding is specified, the upper limit of the configured value of the number of EHT-LTF symbols is a number larger than 8 (16 symbols in FIG. 14).

For example, when the AP specifies an NDP type other than NDP transmission for Sounding to the terminal, the upper limit of the configured value of the number of EHT-LTF symbols is configured to a first value, and the AP configures the number of EHT-LTF symbols to a value less than or equal to the first value. When the AP specifies NDP transmission for Sounding to the terminal, the upper limit of the configured value of the number of EHT-LTF symbols is configured to a second value greater than the first value, and AP configures the number of EHT-LTF symbols to a value less than or equal to the second value. Note that the number of EHT-LTF symbols is an example of the size of the signal transmitted by the terminal.

In this manner, according to the NDP type information (for example, according to whether an NDP type of NDP transmission for Sounding is specified), information (the number of EHT-LTF symbols) is configured in Number Of HE/EHT-LTF symbols subfield, thereby making it possible to specify appropriate information according to the NDP type to the terminal. In addition, the spatial multiplexing number of the number of EHT-LTF symbols of NDP for Sounding can be made greater by increasing the upper limit of the configured value of the number of EHT-LTF symbols.

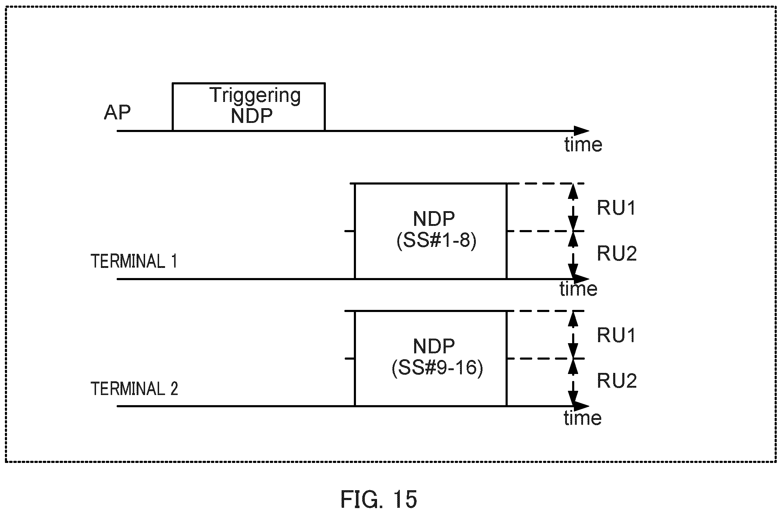

FIG. 15 is a figure illustrating an example of NDP transmission for Sounding. FIG. 15 illustrates Trigger frame from the AP to terminal 1, terminal 2, and the NDP transmitted by terminal 1 and terminal 2 that have received Trigger frame. The horizontal axis of each of the AP, terminal 1 and terminal 2 in FIG. 15 indicates time axis.

As illustrated in FIG. 15, the number of streams (the number of terminals) can be increased, for which NDPs of a plurality of terminals are orthogonally multiplexed within Sounding band (the band of RU1 + RU2 in FIG. 15). Thus, the overhead of the Sounding NDP transmission of the plurality of terminals can be reduced.

Note that the spatial multiplexing of EHT-LTF symbols is implemented, for example, by multiplying a plurality of EHT-LTF symbols by each row (corresponding to Spatial Stream (SS) number) of P matrix which is an orthogonal sequence. When the upper limit of the configured value of the number of EHT-LTF symbols is increased, P matrix having the size of "the number of EHT-LTF symbols × the number of EHT-LTF symbols" needs to be defined in Spec.

In FIG. 15, terminal 1 uses SS numbers 1 to 8 to transmit orthogonally multiplexed EHT-LTF symbols from 8 antennas (8 streams) of terminal 1. Terminal 2 uses SS numbers 9 to 16 to transmit orthogonally multiplexed EHT-LTF symbols from 8 antennas (8 streams) of terminal 2. In this manner, NDPs (EHT-LTF symbols) of terminal 1 and terminal 2 are transmitted in RU1 and RU2 by being spatially multiplexed using different SS numbers. Since the spatial multiplexing using different SS numbers enables orthogonal multiplexing, Sounding in a broadband is made possible with less overhead.

In the above, an example has been illustrated in which the terminal common information (e.g., the number of EHT-LTF symbols) for NDP transmission for Sounding is specified by the Number Of HE/EHT-LTF symbols subfield of Common Info field, however, the present disclosure is not limited to this.

The terminal common information (e.g., the number of EHT-LTF symbols) for NDP transmission for Sounding may be specified by the subfields in part of Special User Info field. For example, when NDP transmission for Sounding is specified, the subfields in part of Special User Info field may be alternately interpreted. For example, Reserved subfield of Special User Info field may be alternately interpreted.

Reserved subfield of Special User Info field may be configured based on a correspondence relationship similar to the correspondence relationship between the value of Number Of HE/EHT-LTF symbols subfield and the number of the symbols when NDP transmission for Sounding is specified (in the case of "Sounding NDP") illustrated in FIG. 14. When NDP transmission for Sounding is specified, Reserved subfield of Special User Info field may be interpreted based on the correspondence relationship in the case of "Sounding NDP" of FIG. 14. Consequently, the effect similar to that of the above-described notification in Common Info field is obtained.

### <First Example of Terminal Individual Information Specification Method according to NDP Type>

The terminal individual information (e.g., SS number by which the number of EHT-LTF symbols is multiplied) for NDP transmission for Sounding may be specified by the subfields in part of User Info field. For example, when NDP transmission for Sounding is specified, the subfields in part of User Info field may be alternately interpreted.

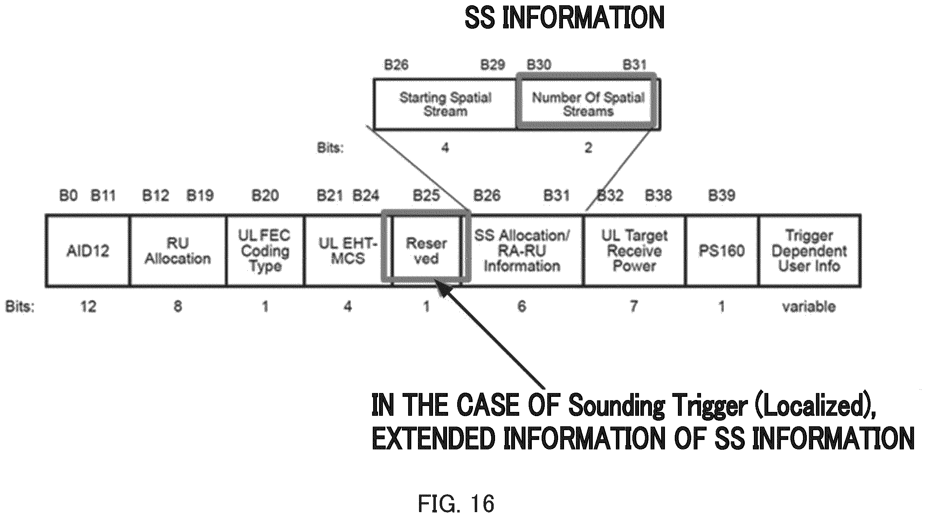

FIG. 16 is a chart illustrating an example of alternate interpretation of Reserved subfield of User Info field. FIG. 16 illustrates the subfield used for alternate interpretation of terminal individual information in User Info field illustrated in FIG. 2. For example, when NDP transmission for Sounding is specified to the terminal, as illustrated in FIG. 16, the AP configures, to Reserved subfield of User Info field, extended information on the SS number by which EHT-LTF symbol of NDP is multiplied. When NDP transmission for Sounding is specified, the terminal alternately interprets Reserved subfield of User Info field as the extended information for the SS number by which EHT-LTF symbol of NDP is multiplied.

With 2 bits of "Number Of Spatial Streams subfield", when the upper limit of the spatial multiplexing number of NDP for Sounding is increased, the SS number that can be notified to is limited. Thus, Reserved subfield is extended by one bit, and totally three bits are used to notify of the SS number.

In this manner, according to the NDP type information (for example, according to whether an NDP type of NDP transmission for Sounding is specified), information (SS number) is configured in subfield of User Info field, thereby making it possible to specify appropriate information according to the NDP type to the terminal. Consequently, even when the upper limit of the spatial multiplexing number of NDP for Sounding is increased, a spatial multiplexing number can be specified without being limited, thus NDP transmission for Sounding of the terminal can be implemented with less overhead.

Efficient NDP transmission according to the application in NDP can be specified using the above-mentioned Trigger frame format that specifies multiple types of NDP transmission, thus the performance is improved.

For example, in the case of NDP transmission for Resource request, NDP transmission of each terminal is specified by Tone allocation in which many terminals are sparsely arranged in part of the channels. In contrast, in the case of NDP transmission for Sounding, NDP transmission of each terminal is specified by Tone allocation in which terminals are relatively densely arranged so that high measurement accuracy is obtained in a broadband scheduled by the AP. In addition, in the case of NDP transmission for Sounding, the overhead of NDP transmission from the plurality of terminals can be reduced by enhancing the upper limit of the number of EHT-LTF (or EHTplus-LTF) symbols to increase the spatial multiplexing number.

### <Second Example: Distributed Allocation>

In the NDP transmission for Sounding, an allocation method may be applied by which the NDP signals of the terminal are allocated to a predetermined Sounding band with a predetermined Tone interval in a predetermined number of Tone units. The allocation method is referred to as Distributed allocation.

In the Distributed allocation, as compared to the NDP transmission for Sounding by the above-described Localized allocation, NDP signal can be transmitted in a broadband with the same transmitted power density.

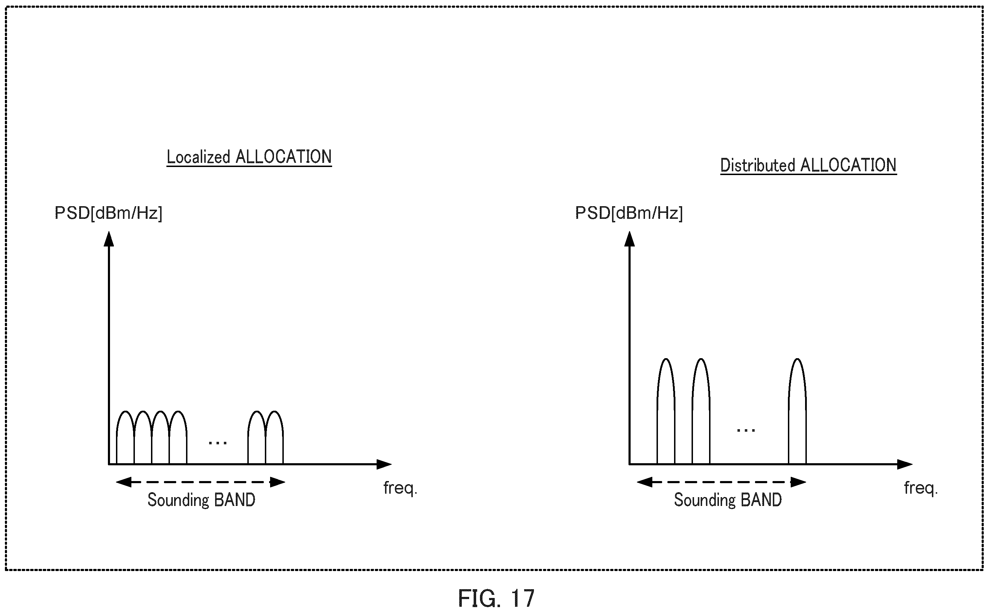

FIG. 17 is a figure illustrating an example of Localized allocation and Distributed allocation. In each of Localized allocation and Distributed allocation of FIG. 17, the horizontal axis indicates frequency, and the vertical axis indicates power spectral density (PSD). FIG. 17 illustrates power spectral density for each Tone. As illustrated in FIG. 17, with the same transmission band (Sounding band), transmitted power density per Tone can be higher in Distributed allocation than in Localized allocation, thus the measurement accuracy of Sounding can be improved in the Distributed allocation than in the Localized allocation.

However, as compared to Localized allocation, Distributed allocation has characteristics such that the effect of interference between terminals due to frequency offset and synchronization error is greater. Therefore, the AP can improve the measurement accuracy of Sounding by considering the capability and/or the communication performance of the terminal to which NDP transmission is specified, and the measurement accuracy of Sounding can be improved by changing Tone allocation method for NDP transmission for Sounding.

### <Second Example of NDP Type Specification Method>

An NDP specification method for Sounding of Distributed allocation is similar to the above-described first example (NDP for Sounding of Localized allocation) of NDP type specification method.

As illustrated in FIG. 12, FIG. 13, even in NDP transmission for Sounding, multiple types of NDP transmission with different Tone allocation may be defined. As illustrated in FIG. 12, FIG. 13, "Sounding with Distributed allocation" indicating NDP transmission for Sounding of Distributed allocation may be added. As the first example of NDP type specification method, NDP transmission for Sounding of Distributed allocation may be specified.

### <Second Example of Terminal Common Information Specification Method according to NDP Type>

Terminal common information (e.g., Tone interval) for NDP transmission for Sounding of Distributed allocation may be specified by the subfields in part of Special User Info field. For example, when NDP transmission for Sounding of Distributed allocation is specified, the subfields in part of Common Info field may be alternately interpreted. Illustratively, an example is shown in which when NDP transmission for Sounding of Distributed allocation is specified, Number Of HE/EHT-LTF symbols subfield is alternately interpreted as subfield ("Tone interval subfield") indicating information related to Tone interval.

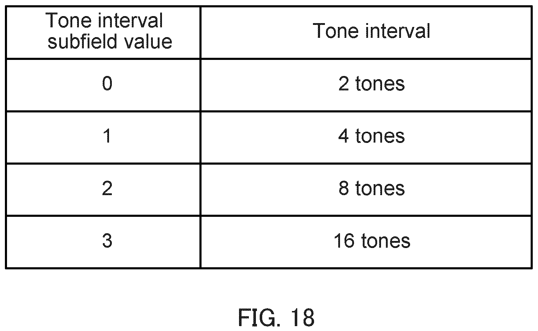

FIG. 18 is a table illustrating an example of notification of Tone interval of Distributed allocation. In FIG. 18, a correspondence relationship between the value of Tone interval subfield, and the Tone interval indicated by the value is illustrated in a table format. When NDP transmission for Sounding of Distributed allocation is specified, the value of Tone interval subfield is configured based on the example illustrated in FIG. 18. For example, when NDP transmission for Sounding of Distributed allocation is specified to the terminal, the AP determines Tone interval based on FIG. 18, and configures information indicating the Ton interval to Number Of HE/EHT-LTF symbols subfield. When NDP transmission for Sounding of Distributed allocation is specified to the terminal, the terminal obtains the information related to the Ton interval by alternately interpreting Number Of HE/EHT-LTF symbols subfield as Tone interval subfield.

In this manner, according to the NDP type information (for example, according to whether an NDP type of NDP transmission for Sounding of Distributed allocation is specified), information (Tone interval) is configured in Number Of HE/EHT-LTF symbols subfield, thereby making it possible to specify appropriate information according to the NDP type to the terminal. Consequently, NDP transmission for Sounding of Distributed allocation can be specified, and NDPs of the plurality of terminals can be orthogonally multiplexed in a predetermined Sounding band with allocated Tone. Thus, the overhead of the Sounding NDP transmission of the plurality of terminals can be reduced.

### <Second Example of Terminal Individual Information Specification Method according to NDP Type>

Terminal individual information (e.g., allocated Tone number of LTF symbol) for NDP transmission for Sounding of Distributed allocation may be specified by the subfields in part of User Info field. For example, when NDP transmission for Sounding of Distributed allocation is specified, the subfields in part of User Info field may be alternately interpreted.

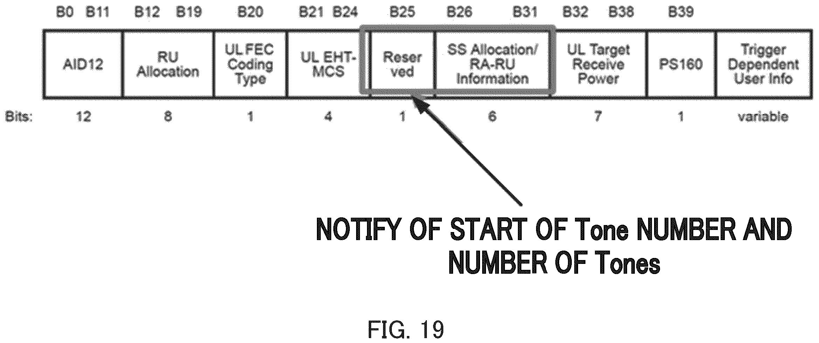

FIG. 19 is a chart illustrating an example of alternate interpretation in User Info field. FIG. 19 illustrates subfields used for alternate interpretation in User Infor field illustrated in FIG. 2. For example, when NDP transmission for Sounding of Distributed allocation is specified, as illustrated in FIG. 19, the AP configures information to SS Allocation subfield and Reserved subfield of User Info field, the information on the start of Tone number to which EHT-LTF symbol is allocated and the number of Tones. When NDP transmission for Sounding of Distributed allocation is specified, the terminal alternately interprets SS Allocation subfield and Reserved subfield of User Info field as the information on the start of Tone number to which EHT-LTF symbol is allocated and the number of Tones.

In this manner, according to the NDP type information (for example, according to whether NDP transmission for Sounding of Distributed allocation is specified), information (information on the start of Tone number to which EHT-LTF symbol is allocated and the number of Tones) is configured in subfield of User Info field, thereby making it possible to specify appropriate information according to the NDP type to the terminal.

For example, when the Tone interval in common between terminals is 8, Tone number of 1 to 8 can be configured. Different Tone numbers are allocated to the antennas (streams) of each terminal, thus orthogonal multiplexing can be achieved between terminals ( between streams). For a terminal expected to be low in communication quality, the measurement accuracy can be improved by increasing the number of Tones allocated to the antennas so that EHT-LTF symbols are densely allocated.

In the above, as examples of NDP transmission for Sounding, NDP transmission for Sounding of Localized allocation and NDP transmission for Sounding of Distributed allocation have been mentioned, however, the present disclosure is not limited to these. A variation of NDP transmission for Sounding will be described below.

### <Variation 1: Repetition Transmission>

In NDP transmission for Sounding, Repetition transmission may be applied by which multiple EHT-LTF (or EHTplus-LTF) symbols multiplied by an orthogonal sequence of P matrix are repeatedly transmitted for a predetermined number of times. In other words, AP may specify Repetition transmission to the terminal.

For example, the AP causes the terminal to Repetition-transmit EHT-LTF symbols by Localized allocation. The band in which EHT-LTF symbols are transmitted by Localized allocation may be uniform in each of repeated transmission. The AP can improve the accuracy of quality measurement by composing EHT-LTF symbols Repetition-transmitted by the terminal.

In addition, the AP causes the terminal to Repetition-transmit EHT-LTF symbols by Distributed allocation. The band in which EHT-LTF symbols are transmitted by Distributed allocation may be uniform in each of repeated transmission. The terminal transmits a signal with a changed allocation Tone in each of repetition of the Repetition transmission. The AP can randomize the effect of interference by averaging an estimated result of the received signal, thus can improve the accuracy of the quality measurement.

The AP causes the terminal to Repetition-transmit EHT-LTF symbols in the same band by Localized allocation or Distributed allocation. The band in which EHT-LTF symbols are transmitted by Localized allocation or Distributed allocation may be uniform in each of repeated transmission. The AP changes a reception analog beam in each of repetition of the Repetition transmission of a terminal, and performs quality measurement from signals received by each beam, thus the AP can select an optimal received beam. The communication performance can be improved by applying the selected received beam to the signal reception from the terminal.

An application in update (received beamforming control) of the optimal received beam in a predetermined cycle may be added as an NDP type. For example, when received beamforming control is specified as an example of NDP type, the subfields in part of Trigger frame may be alternately interpreted as information indicating the number of Repetition transmissions of EHT-LTF symbol.

The band in which EHT-LTF symbols are transmitted by Localized allocation may not be uniform in each of repeated transmission. For example, when specifying repetition transmission of EHT-LTF symbol by Localized allocation to the terminal, the AP may specify transmission to different bands in each of repeated transmission. In other words, when specifying repetition transmission of EHT-LTF symbol by Localized allocation to the terminal, the AP may specify frequency hopping in each of repeated transmission. The AP can specify NDP transmission in a broadband with less overhead (for example, with less Trigger frame) by applying frequency hopping to EHT-LTF symbols for each Repetition transmission.

### <NDP Type Specification Method of Variation 1>

An NDP specification method using Repetition transmission is similar to the above-described first example (NDP transmission for Sounding) of NDP type specification method.

As illustrated in FIG. 12, FIG. 13, as an NDP type, "UL beamforming management" may be added, which indicates NDP transmission for Sounding to control uplink beamforming. As the first example of NDP type specification method, NDP transmission by Repetition transmission may be specified.

As illustrated in FIG. 12, FIG. 13, as an NDP type, "Sounding with frequency hopping" may be added, which indicates NDP transmission for Sounding using the frequency hopping. As the first example of NDP type specification method, NDP transmission that changes the transmission band in each of Repetition transmission may be specified.

### <Terminal Common Information Specification Method according to NDP Type of Variation 1>

Terminal common information (e.g., the number of Repetitions) for NDP transmission (e.g., UL beamforming management) using Repetition transmission may be specified by the subfields in part of Common Info field. For example, when NDP transmission using Repetition transmission is specified, the subfields in part of Common Info field may be alternately interpreted. Illustratively, an example is shown in which when NDP transmission using Repetition transmission is specified, Reserved subfield of Common Info field is alternately interpreted as subfield ("Number of repetitions subfield") indicating information related to the number of repetitions.

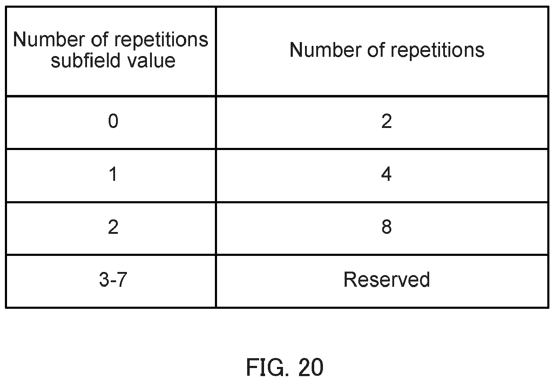

FIG. 20 is a table illustrating an example of notification of the number of repetitions. In FIG. 20, a correspondence relationship between the value of Number of repetitions subfield, and the number of repetitions of EHT-LTF symbol indicated by the value is illustrated in a table format. When NDP transmission using Repetition transmission is specified, the value of Number of repetitions subfield is configured based on the example illustrated in FIG. 20. For example, when specifying NDP transmission using Repetition transmission to the terminal, the AP determines the number of repetitions based on FIG. 20, and configures information indicating the number of repetitions to Reserved subfield of Common Info field. When NDP transmission using Repetition transmission is specified, the terminal obtains information on the number of Repetitions of EHT-LTF symbol by alternately interpreting Reserved subfield of Common Info field as Number of repetitions subfield.

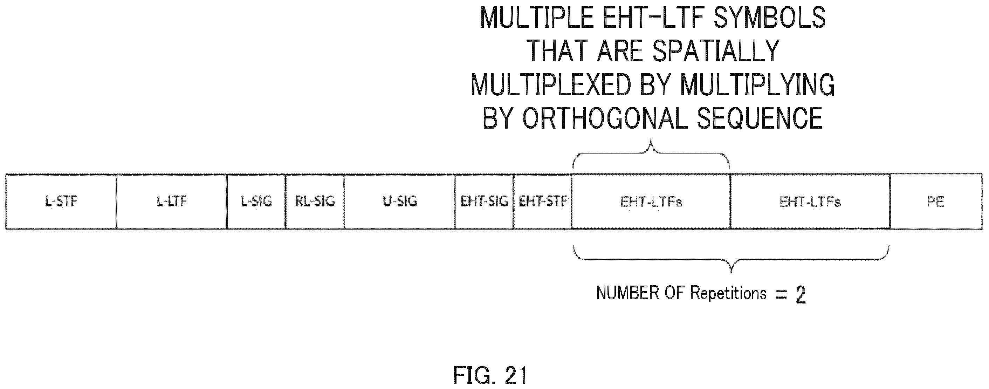

FIG. 21 is a chart illustrating an example of repetition transmission. FIG. 21 illustrates an example of NDP transmitted by the terminal when the number of Repetitions = 2 is specified. As illustrated in FIG. 21, the terminal transmits multiple EHT-LTF symbols twice. The multiple EHT-LTF symbols transmitted may be spatially multiplexed by being multiplied by an orthogonal sequence by P matrix.

In this manner, according to the NDP type information (for example, according to whether NDP transmission using repetition transmission is specified), information (the number of Repetitions) is configured in Reserved subfield of Common Info field, thereby making it possible to specify appropriate information according to the NDP type to the terminal.

### <Terminal Individual Information Specification Method according to NDP Type of Variation 1>

Terminal individual information (e.g., the offset amount (Tone unit or RU unit) of the position of a transmission band in each of Repetition transmissions) for NDP transmission (e.g., UL beamforming management) using Repetition transmission may be specified by the subfields in part of User Info field. For example, when NDP transmission using Repetition transmission is specified, the subfields in part of User Info field may be alternately interpreted.

For example, the subfield notifying of control information related to data transmission is alternately interpreted as information on the offset amount of the position of a transmission band in each of Repetition transmissions. Note that the subfield notifying of control information related to data transmission is e.g., UL FEC Coding Type subfield and/or UL HE-MCS subfield of User Info field.

The control information related to data transmission is unnecessary information for NDP transmission not accompanied by data. Thus, no problem occurs even if the subfield notifying of control information related to data transmission is alternately interpreted as a subfield notifying of information other than the control information related to data transmission.

For example, using 5 bits obtained by adding UL FEC Coding Type subfield and UL HE-MCS subfield of User Info field, a value in the range from -15 to 15 is sent for notification.

The unit of offset amount may be RU unit for the case of Localized allocation, or Tone unit for the case of Distributed allocation. The terminal transmits the EHT-LTF symbol of Repetition transmission for the first time in the band (the first band) specified in RU Allocation subfield. When transmitting the EHT-LTF symbol of Repetition transmission for the second time, the terminal transmits the EHT-LTF symbol in the band obtained by adding an offset amount to the first band. Similarly, when transmitting the EHT-LTF symbol of Repetition transmission for the third or subsequent time, the terminal transmits the EHT-LTF symbol in the band obtained by adding an offset amount to the band of the last Repetition transmission.

The terminal performs each of Repetition transmissions in the same band by the AP configuring the offset amount to 0, and the AP can improve the accuracy of quality measurement by composing EHT-LTF symbols Repetition-transmitted by the terminal in the same band. The AP changes the reception analog beam for receiving the NDP transmitted from the terminal in each of Repetition transmissions, and performs quality measurement for each beam, thus can select an optimal received beam.

When the terminal performs repetition transmission on the EHT-LTF symbol, the AP can apply frequency hopping to each of Repetition transmissions by configuring a non-zero offset amount.

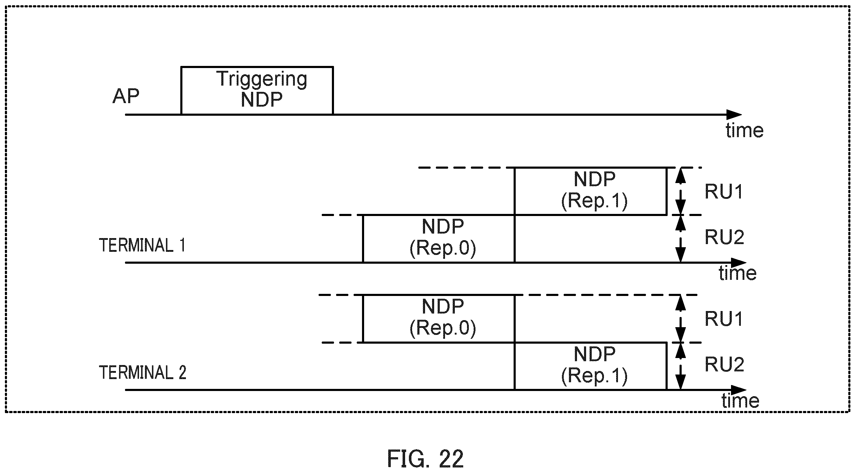

FIG. 22 is a chart illustrating an example of frequency hopping. FIG. 22 illustrates an example in which the AP transmits Trigger frame which triggers NDP transmission, and performs the NDP transmission based on the Trigger frame received by terminal 1 and terminal 2. The horizontal axis of each of the AP, terminal 1 and terminal 2 in FIG. 22 indicates time axis. In FIG. 22, terminal 1 transmits an NDP signal (e.g., EHT-LTF symbol) in RU2 in the repetition transmission ("Rep.0" in FIG. 22) for the first time, and transmits an NDP signal in RU1 in the repetition transmission ("Rep. 1" in FIG. 22) for the second time. Terminal 2 transmits an NDP signal in RU1 in the repetition transmission for the first time, and transmits an NDP signal in RU2 in the repetition transmission for the second time. In each repetition transmission, the NDP signals of Terminal 1 and Terminal 2 are frequency-multiplexed.

In this manner, according to the NDP type information (for example, according to whether an NDP type of NDP transmission for Sounding of Distributed allocation is specified), information (e.g., information on offset amount) is configured in UL FEC Coding Type subfield and/or UL HE-MCS subfield, thereby making it possible to specify appropriate information according to the NDP type to the terminal.

The AP can perform broadband Sounding with one Trigger frame by applying frequency hopping to NDP transmission. As illustrated in FIG. 22, frequency hopping may be applied while frequency-multiplexing NDPs of a plurality of terminals. Consequently, broadband Sounding can be achieved by one Trigger frame.

### <Variation 2: Antenna Switching>

The above-described NDP transmission using Repetition transmission may be applied to a method of performing transmission while switching the transmission antenna in each of Repetition transmissions in the terminal.

Some terminals are implemented with "the number of reception antennas > the number of transmission antennas" as an antenna configuration implemented thereon. For example, due to a reason for implementation or a reason for reducing the cost, "the number of reception antennas > the number of transmission antennas" may be imposed. For example, as illustrated in FIG. 7, a terminal physically having four antennas may receive a signal by the four antennas at the time of reception, and may transmit a signal by either one of the four antennas at the time of transmission. Hereinafter the configuration in which four antennas are used for reception, and one antenna is used for transmission may be written as 1T4R.

Such an antenna configuration of a terminal is defined as Capability information of the terminal, and the antenna configuration is shared between the terminal and AP connected to the terminal in advance. For example, in the case of FIG. 7, when being connected to the AP, the terminal notifies the AP of information indicating the antenna configuration called 1T4R as Capability information of the terminal.

The AP specifies, to the terminal, "NDP transmission while switching the transmission antenna for each of Repetition transmissions" based on the Capability information of the terminal. The terminal transmits an NDP based on the specification while switching the transmission antenna for each of Repetition transmissions. The AP receives an NDP for each Repetition transmission of the terminal, measures the reception quality, compares the reception quality, and selects an optimal transmission antenna in the terminal. For example, the AP selects, as an optimal transmission antenna, a transmission antenna used for repetition transmission with the best reception quality. The AP specifies the selected transmission antenna to the terminal. In the transmission process after receiving the specification, the terminal can improve the communication performance in the uplink by using the selected transmission antenna. In an environment where the reversibility of channel characteristics is expected, the channel characteristics (e.g., a frequency response) in the uplink from an antenna of the terminal to the AP is expected to be equivalent to the channel characteristics in the downlink from the AP to the antenna. In this environment, the AP may calculate a precoding matrix to be applied to the downlink data signal by estimating a frequency response of the channel between the AP and each of the reception antennas of the terminal based on the reception quality of the NDP for each Repetition transmission of the terminal.

### <NDP Type Specification Method of Variation 2>

An NDP specification method that switches transmission antenna for each Repetition transmission is similar to the above-described first example (NDP transmission for Sounding) of NDP type specification method.

As illustrated in FIG. 12, FIG. 13, as an NDP type, "Transmission antenna switching" may be added, which indicates NDP transmission in which the transmission antenna is switched for each Repetition transmission. As the first example of NDP type specification method, NDP transmission in which the transmission antenna is switched for each Repetition transmission may be specified.

When receiving a specification of NDP transmission in which the transmission antenna is switched for each Repetition transmission, the terminal Repetition-transmits EHT-LTF symbols for "the number of reception antennas/the number of transmission antennas" based on the Capability of antenna configuration of the terminal.

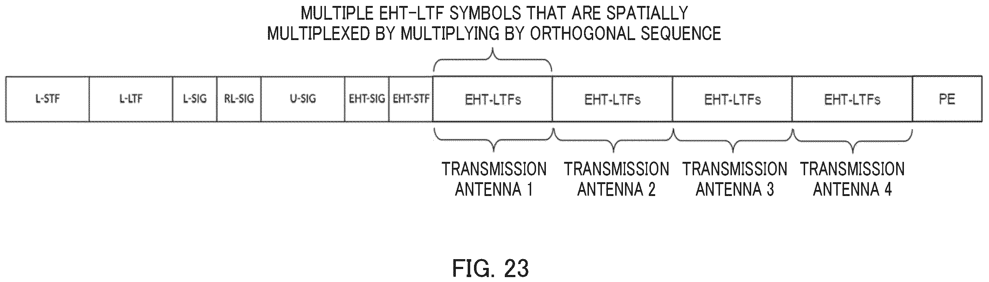

FIG. 23 is a chart illustrating an example of transmission antenna switching. FIG. 23 illustrates an example of NDP transmitted by the terminal when the antenna configuration is 1T4R. As illustrated in FIG. 23, when the antenna configuration is 1T4R, the terminal performs Repetition transmission four times, and transmits EHT-LTF symbol while switching the transmission antenna in a predetermined antenna number order for each Repetition transmission.

### <Terminal Common Information Specification Method according to NDP Type of Variation 2>

Capability information on the antenna configuration of the terminal is notified from the terminal to the AP connected to the terminal. Due to this notification, the terminal does not need to be notified of the terminal common information for NDP transmission in which the transmission antenna is switched for each Repetition transmission.

### <Terminal Individual Information Specification Method according to NDP Type of Variation 2>

As with the terminal common information, Capability information on the antenna configuration of the terminal is notified to the AP connected to the terminal. Due to this notification, the terminal does not need to be notified of the terminal individual information for NDP transmission in which the transmission antenna is switched for each Repetition transmission. For example, the number of Repetitions can be derived by the terminal from the Capability information of the terminal instead of being notified from the AP to the terminal.

### <Variation 3: NDP Transmission Using ZC Sequence>

In the above-described NDP transmission for Sounding, a method may be applied which uses CAZAC (CAZAC (Constant Amplitude Zero Auto Correlation) sequence (e.g., Zadoff- Chu (ZC) sequence) as EHT-LTF symbol.

For example, ZC sequence used for a stream A by a terminal A is cyclically shifted by using ZC sequence having ideal autocorrelation characteristics, and terminal A can apply the cyclically shifted ZC sequence (Cyclic-ZC sequence) to another stream different from stream A. Alternatively, in this case, the cyclically shifted ZC sequence (Cyclic-ZC sequence) can be applied to another terminal different from terminal A. In this manner, EHT-LTF symbols of another stream and/or another terminal can be orthogonally multiplexed by encoding using ZC sequence, thus the accuracy of the quality measurement of the AP can be improved. In EHT-LTF symbol, it is possible to increase the number of streams and/or the number of terminals which can be orthogonally multiplexed.

### <NDP Type Specification Method of Variation 3>

An NDP transmission for Sounding specification method using ZC sequence is similar to the above-described first example (NDP transmission for Sounding) of NDP type specification method.

As illustrated in FIG. 12, FIG. 13, as an NDP type, "Sounding using ZC sequence" may be added, which indicates NDP transmission for Sounding using ZC sequence. As the first example of NDP type specification method, NDP transmission in which the transmission antenna is switched for each Repetition transmission may be specified.

### <Terminal Common Information Specification Method according to NDP Type of Variation 3>

The terminal common information (e.g., sequence for EHT-LTF symbol generation) for using ZC sequence to generate EHT-LTF symbol is not limited to the NDP type information. For example, the terminal common information (e.g., sequence for EHT-LTF symbol generation) for using ZC sequence to generate EHT-LTF symbol may be used in Trigger frame for normal data transmission.

For example, the subfields (e.g., Reserved subfield) in part of Special User Info field may be alternately interpreted as sequence information. Hereinafter the subfield for configuring sequence information is referred to as "LTF sequence subfield". In other words, when Sounding using ZC sequence is specified as an NDP type, the subfields (e.g., Reserved subfield) in part of Special User Info field is alternately interpreted as LTF sequence subfield.

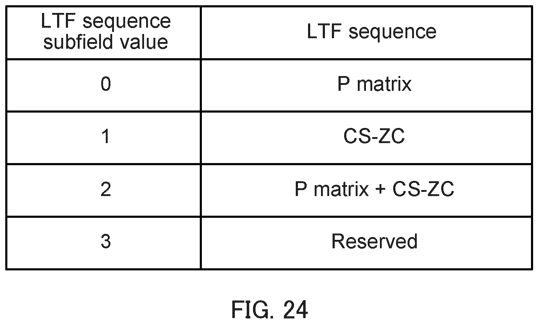

FIG. 24 is a table illustrating an example of notification of LTF generation sequence. In FIG. 24, a correspondence relationship between the value of LTF sequence subfield, and the sequence used for LTF indicated by the value is illustrated in a table format. As illustrated in FIG. 24, in LTF sequence subfield, sequence information indicating whether EHT-LTF symbol is generated using an orthogonal sequence of P matrix or generated using ZC sequence is notified.

In this manner, according to the NDP type information (for example, according to whether NDP transmission for Sounding using ZC sequence is specified), information (e.g., sequence information) is configured in the subfields (e.g., Reserved subfield) in part of Special User Info field, thereby making it possible to specify appropriate information according to the NDP type to the terminal.

When P matrix is used, signals in multiple streams are spatially multiplexed, thus information related to the number of EHT-LTF symbols with an orthogonal sequence length needs to be transmitted. When ZC sequence is used, the information can be transmitted with one EHT-LTF symbol by performing code multiplexing using CS-ZC sequence to which a cyclic-shift amount different for each stream is applied. Using CS-ZC sequence, EHT-LTF symbol can be reduced, thus the overhead can be reduced.

Note that EHT-LTF symbol may be generated by combination of spatial multiplexing by P matrix and code multiplexing by CS-ZC sequence. The combination can increase the orthogonal multiplexing number, thus the overhead can be reduced.

### <Terminal Individual Information Specification Method according to NDP Type of Variation 3>

The terminal individual information (e.g., ZC sequence number, cyclic-shift amount) for using ZC sequence to generate EHT-LTF symbol may be specified by the subfields in part of User Info field. For example, when use of ZC sequence for generation of EHT-LTF symbol is specified, the subfields in part of User Info field may be alternately interpreted.

For example, the subfield notifying of control information related to data transmission is alternately interpreted as information on ZC sequence number and cyclic-shift amount. Note that the subfield notifying of control information related to data transmission is, for example, UL FEC Coding Type subfield and/or UL HE-MCS subfield of User Info field. The subfield including the information on ZC sequence number and cyclic-shift amount is written as "ZC subfield". In this case, UL FEC Coding Type subfield and/or UL HE-MCS subfield of User Info field are alternately interpreted as ZC subfield.

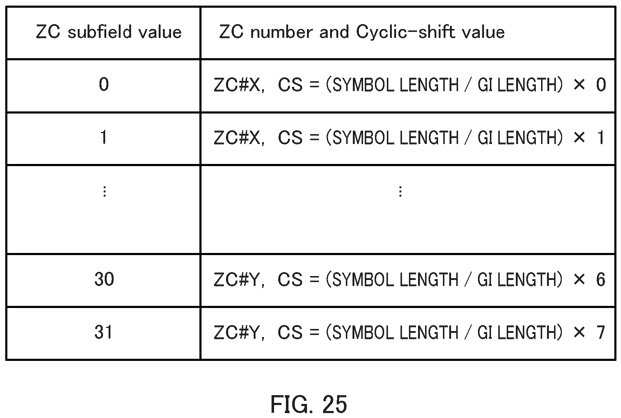

FIG. 25 is a table illustrating an example of notification of ZC sequence number and cyclic-shift amount. In FIG. 25, a correspondence relationship between the value of ZC subfield, and the ZC sequence number and cyclic-shift amount indicated by the value is illustrated in a table format. The value of ZC subfield is configured based on the example illustrated in FIG. 25. For example, when use of ZC sequence for generation of EHT-LTF symbol is specified, the terminal obtains the information on ZC sequence number and cyclic-shift amount by alternately interpreting UL FEC Coding Type subfield and/or UL HE-MCS subfield of User Info field as ZC subfield.

For the cyclic-shift amount, for example, a delay wave with GI length is taken into consideration, then the cyclic-shift amount is defined in the time unit of symbol length/GI length.

In this manner, according to the NDP type information (for example, according to whether NDP transmission for Sounding using ZC sequence is specified), information (e.g., ZC sequence number and cyclic-shift amount) is configured in UL FEC Coding Type subfield and/or UL HE-MCS subfield, thereby making it possible to specify appropriate information according to the NDP type to the terminal. Thus, EHT-LTF symbol can be generated using orthogonal CS-ZC sequences between terminals, NDP signals of multiple terminals can be code-multiplexed in the same band, and the overhead can be reduced.

### <Variation 4: NDP transmission for 11bf (for sensing)>

As the NDP transmission for multiple applications, NDP transmission for sensing (e.g., a signal for detecting a human or an object between a transmission antenna and a reception antenna) which is being studied in IEEE802. 1 1bf may be included.

For example, either one of NDP transmission for sensing application defined in 11bf, or the above-described NDP transmission for Sounding application for EHT and EHTplus gives specification to one or more terminals 1 with one Trigger frame.

### <Terminal Common Information Specification Method according to NDP Type of Variation 4>

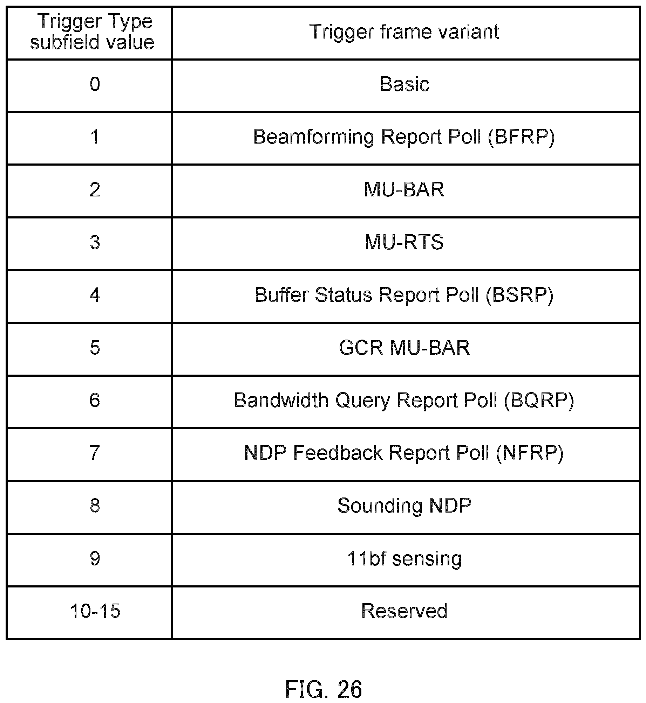

FIG. 26 is a table illustrating an example of notification of NDP type by Trigger Type. As in FIG. 11, in FIG. 26, a correspondence relationship between the value ("Trigger Type subfield value") configured to Trigger Type subfield, and the type ("Trigger frame variant") indicated by the value is illustrated in a table format. In FIG. 26, " 11bf sensing" indicating NDP transmission for sensing application for 11bf is added to FIG. 11. In the example of FIG. 26, 11bf sensing is associated with the value 9 which is configured in Trigger Type subfield. According to the example of FIG. 26, when the value of Trigger Type subfield is configured to 9, NDP transmission for sensing application in 11bf can be specified to the terminal.

As exemplified in FIG. 26, without being limited to the example of adding 11bf sensing to the NDP type by Trigger Type. For example, instead of adding 11bf sensing to the NDP type by Trigger Type, 11bf sensing may be further added as an NDP type to the examples illustrated in FIG. 12, FIG. 13. As the first example of NDP type specification method, NDP transmission for sensing application in 1 1bf may be specified as an NDP type.

In this manner, as the first example of NDP type specification method, the type of NDP can be appropriately specified from the AP to the terminal by being able to specify NDP transmission for sensing application in 11 bf. NDP transmission of a type selected from multiple types can be specified to the plurality of terminals. Thus, in addition to NDP transmission for Sounding application for EHT, NDP transmission for sensing application in 11bf can also be specified by one Trigger frame in common between multiple terminals.

### <Terminal Individual Information Specification Method according to NDP Type of Variation 4>

The terminal individual information (e.g., specification of NDP for 11bf or NDP for EHT) for NDP transmission for sensing application for 11bf may be specified by the subfields in part of Special User Info field. For example, when a predetermined Trigger Type (e.g., NFRP Trigger or Sounding NDP) is specified, the subfields in part of User Info field may be alternately interpreted. For example, Reserved subfield of User Info field may be alternately interpreted as information indicating specification of NDP for 1 1bf of NDP for EHT. The subfield for configuring information indicating specification of NDP for 11bf or NDP for EHT is written as NDP version subfield. In other words, Reserved subfield of User Info field may be alternately interpreted as NDP version subfield.

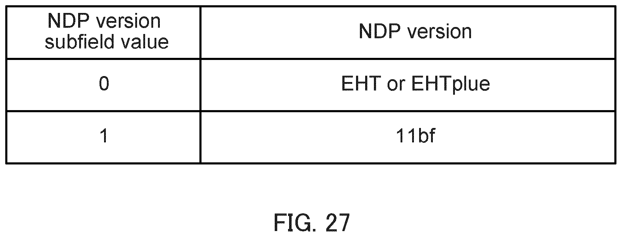

FIG. 27 is a table illustrating an example of notification of NDP version. FIG. 27 shows that when NDP version subfield is configured to 0, NDP for EHT or EHTplus is specified, and when NDP version subfield is configured to 1, NDP for 11bf is specified. When NDP transmission for sensing application for 11bf is specified, the terminal obtains NDP version information indicating NDP for 11bf or NDP for EHT or EHTplus by alternately interpreting Reserved subfield of User Info field as NDP version subfield based on FIG. 27.

In this manner, according to the NDP type information (for example, according to whether NDP transmission for sensing application for 11bf is specified), information (e.g., NDP version information) is configured in Reserved subfield of User Info field, thereby making it possible to specify appropriate information according to the NDP type to the terminal. Thus, either one of NDP transmission for Sounding application for EHT or NDP transmission for sensing application in 11bf can be specified by one Trigger frame individually for each terminal.

Due to a reason for synchronizing the transmission timing of a response signal of the AP to multiple terminals for NDP transmission, the packet lengths of NDP for EHT and NDP for 11bf need to be matched. In such a case, the size (e.g., the last subfield in FIG. 21) of PE (Packet Extension) subfield may be adjusted to align the packet lengths. In this case, information related to the size of PE may be specified by the subfields in part of User Info field.

In the examples and the variations of this embodiment described above, the AP configures NDP type information indicating an NDP type (an example of type of a response signal) to a first field (or subfield), and configures information (e.g., the above-described terminal common information and/or terminal individual information) according to the NDP type information to a second field (or subfield). The AP then transmits Trigger frame (an example of a control signal) including the first field and the second field to the terminal. The terminal determines an NDP type based on the first field of Trigger frame, and obtains information from the second field according to the determined NDP type. With this configuration, the type of the response signal can be appropriately specified to the terminal. In addition, it is possible to notify the terminal of appropriate information according to the type of the response signal.

Note that when EHT-LTF symbol that is the LTF symbol in EHT version described in this embodiment is EHTplus version, the EHT-LTF symbol may be renamed for EHTplus. For example, when EHT-LTF symbol is EHTplus version, the EHT-LTF symbol may be referred to as EHTplus-LTF symbol. EHT-LTF symbol described in this embodiment is alternately interpreted as EHTplus-LTF symbol, thus as in EHT version, the EHT-LTF symbol is applicable even in EHTplus version, thus the same effect as in EHT version is obtained.

In cooperative AP communication in which multiple APs cooperatively perform communication, Trigger frame shown in this embodiment is applicable to a trigger signal which specifies Joint NDP transmission in which NDP signals of multiple APs are simultaneously transmitted in the same band.

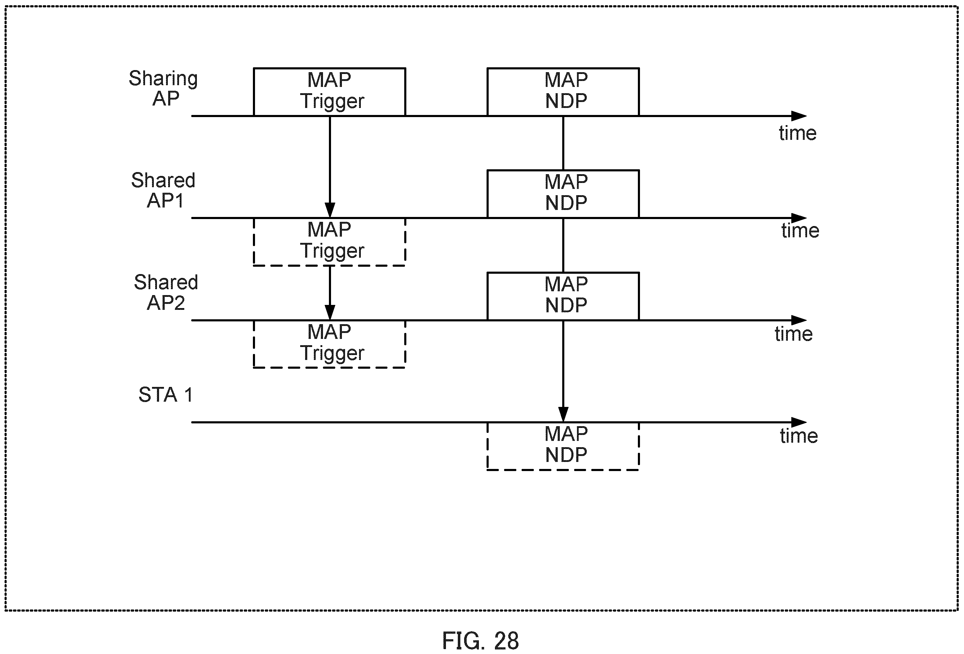

FIG. 28 is a chart illustrating an example of Joint NDP transmission. FIG. 28 illustrates Sharing AP specifying cooperative communication, Shared AP that performs cooperative communication based on the specification from Sharing AP, and a terminal (STA). The horizontal axis of each of Sharing AP, Shared AP1, Shared AP1, and STA1 in FIG. 28 indicates time axis. As illustrated in FIG. 28, Sharing AP transmits Trigger frame specifying NDP transmission to a plurality of Shared APs. Sharing AP and Shared AP transmit an NDP by a predetermined transmission method in accordance with the specification of Trigger frame. The terminal common information and the terminal individual information of this embodiment mode are alternately interpreted as AP common information and AP individual information, thus the same Trigger frame is also applicable to a signal which triggers Joint NDP transmission, and the same effect is obtained.

The fields in part of NDP Announcement frame may be used in Trigger frame specifying NDP transmission shown in this embodiment, the NDP Announcement frame for the AP specifying feedback information on quality to the terminal. For example, in NDP Announcement frame, Feedback Type And Ng field may also be used for the terminal individual information or the terminal common information of this embodiment, and the terminal may specify a band for performing NDP transmission, the Feedback Type And Ng field specifying a band in which the terminal feeds back quality. The complexity of implementation can be reduced by using the format of a conventional signal.

Trigger frame of NDP transmission for received beamforming control shown in Variation 1 is also applicable to Trigger signal for performing beam control for Hybrid Beamforming used in Standard IEEE 802. 1 lay, thus is similarly utilized.

This embodiment is not limited to EHT, EHTplus, and is applicable to a signal for triggering a packet (NDP) including no data such as in IEEE 802.11ay and IEEE 802.11bf, thus a similar effect is obtained.

In this embodiment, an example has been illustrated in which the AP transmits Trigger frame to the terminal, and the terminal transmits an NDP to the AP based on the received Trigger frame, however, the present disclosure is not limited to this. For example, a communication apparatus (e.g., a terminal) different from the AP may transmit Trigger frame, and a communication apparatus (e.g., an AP) different from the terminal may transmit an NDP based on the received Trigger frame.

The terminal individual information notified in User Info field of this embodiment is not limited information for one terminal. The terminal individual information may be for a group (e.g., a group of terminals with AID in a predetermined range) of multiple terminals.

The notification information on NDP type shown in this embodiment may be combined.

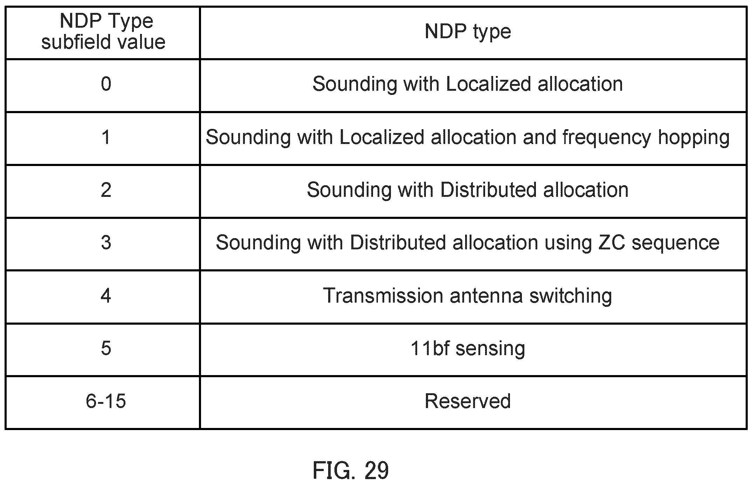

FIG. 29 is a table illustrating an example of a combination of NDP type. As in FIG. 12, FIG. 13, in FIG. 29, a correspondence relationship between the value ("NDP type subfield value") configured to NDP type subfield, and the NDP type ("NDP type") indicated by the value is illustrated in a table format. For example, in FIG. 29, regarding Localized allocation, Localized allocation (NDP Type subfield value = 1 in FIG. 29) which performs frequency hopping, and Localized allocation (NDP Type subfield value = 0 in FIG. 29) which does not perform frequency hopping are selectable. In this manner, an NDP type in combination of Localized allocation and the presence or absence of frequency hopping may be defined.

Distributed allocation enables NDP transmission in a broadband by increasing the Tone interval to be allocated. When Sounding in a broadband is necessary in Localized allocation, NDP transmission in a broadband is made possible by combining frequency hopping.

In FIG. 29, regarding Distributed allocation, Distributed allocation (NDP Type subfield value = 3 in FIG. 29) using ZC sequence, and Distributed allocation (NDP Type subfield value = 2 in FIG. 29) not using ZC sequence are selectable. In this manner, an NDP type in combination of Distributed allocation and the presence or absence of use of ZC sequence may be defined.

In the case of Distributed allocation, frequency multiplexing can be achieved by changing allocation Tone number with one EHT-LTF symbol. When the overhead is desired to be reduced, in order to specify NDP transmission from multiple terminals with one EHT-LTF symbol, it is effective to combine ZC sequence using the cyclic-shift in Distributed allocation. The orthogonal multiplexing level can be increased by combining ZC sequence using the cyclic-shift in Distributed allocation, and NDP transmission from multiple terminals can be performed with one EHT-LTF symbol.

Although an example of a configuration of each frame has been described in the aforementioned embodiments, the information notified is not limited to the information shown in the aforementioned embodiments, and for example, another information may be added, or at least part of the defined information may be deleted.

Also, the frame, element, field, and subfield in the above- described embodiments are each a region (a range or a configuration) included in a signal, and an example of a name of a region (a range or a configuration) that configures information. These may be alternately interpreted as each other.

The names such as frame, element, field, and subfield in the above-described embodiments are an example, and the present disclosure is not limited to the above-described examples. For example, a configuration example of each of Common Info field, User Info field and Special User Info field shown in each of FIG. 1, FIG. 2 and FIG. 3 may be given a different name.

The definition of each of frame, element, field, and subfield in the above-described embodiments is an example, and the present disclosure is not limited to the above-described examples. For example, a correspondence relationship between the value of Trigger Type subfield and the type of trigger frame exemplified in FIG. 11 may be changed to another correspondence relationship different from FIG. 11. For example, in FIG. 11, "Sounding NDP" is associated with Trigger Type subfield = 8, however, "Sounding NDP" may be associated with a value of Trigger Type subfield, other than 8. Also in FIG. 12, FIG. 13, a correspondence between the value of NDP Type subfield and the NDP type may be changed similarly.

The configuration of each of frame, element, field, and subfield in the above-described embodiments is an example, and the present disclosure is not limited to the above-described examples. For example, at least one subfield in the above-described configuration of field may be omitted, or the above-described frame configuration may include a subfield not included in the configuration.

In the above-described embodiments, AP specifying cooperative communication, and AP to which cooperative communication is specified have been described with terms, "Sharing AP" and "Shared AP", respectively, however, without being limited to this, other terms may be used.

In the above-described embodiments, as a non-limiting example, a description has been given based on the format of 1 1be, and the format to which an example of the present disclosure is applicable is not limited to the format of 11be. An example of the present disclosure may be applied to e.g., IEEE 802.11bd (NGV(Next Generation V2X)) which is the next-generation standard after IEEE 802.1 1p that is a standard for in-vehicle equipment.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to one example of the present disclosure includes: a control circuit that generates a control signal in which first information indicating a type of a response signal is configured in a first field, and second information according to the first information is configured in a second field; and a transmission circuit that transmits the control signal.

In one example of the present disclosure, the response signal is a signal not accompanied by data.

In one example of the present disclosure, the first information indicates a type of the response signal, the type being selected from multiple types.

In one example of the present disclosure, the type of the response signal includes application in measurement of communication quality.

In one example of the present disclosure, the first information indicates that, in a band in which the communication quality is measured, the response signal is allocated in a unit which combines multiple smallest allocation units.

In one example of the present disclosure, the first information indicates that, in a band in which the communication quality is measured, the response signal is allocated in a smallest allocation unit.

In one example of the present disclosure, the control circuit, when configuring the first information indicating application different from the application in measurement of the communication quality in the first field, configures an upper limit of a size of the response signal to a first value, and configures a size less than or equal to the first value in the second field as the second information, and when configuring the first information indicating the application in measurement of the communication quality in the first field, configures the upper limit of the size of the response signal to a second value greater than the first value, and configures a size less than or equal to the second value in the second field as the second information.

In one example of the present disclosure, the control circuit, when configuring the first information indicating application different from the application in measurement of the communication quality in the first field, configures an upper limit of an interval of a frequency to which the response signal is allocated to a first value, and configures an interval less than or equal to the first value in the second field as the second information, and when configuring the first information indicating the application in measurement of the communication quality in the first field, configures the upper limit of the interval of the frequency to which the response signal is allocated to a second value greater than the first value, and configures an interval less than or equal to the second value in the second field as the second information.

In one example of the present disclosure, the control circuit configures, to the second field, at least one of a size of the response signal, an interval of a frequency to which the response signal is allocated, a length of a guard interval added to the response signal, and/or a number of repetitions of repeated transmission applied to the response signal.

In one example of the present disclosure, the control circuit configures, to the second field, at least one of stream information corresponding to an orthogonal sequence applied to the response signal, information related to frequency hopping of the response signal, a tone number for allocating the response signal, and/or a transmission antenna to transmit the response signal.

In one example of the present disclosure, the type of the response signal includes application in directivity control of uplink or downlink, application in transmission antenna switching, and application in transmission of the response signal using a sequence.

A communication method according to one example of the present disclosure includes: generating a control signal in which first information indicating a type of a response signal is configured in a first field, and second information according to the first information is configured in a second field; and transmitting the control signal.

The disclosure of Japanese Patent Application No.2022-044112, filed on March 18, 2022, including the specification, drawings and abstract, is incorporated herein by reference in its entirety.

### Industrial Applicability

An example of the present disclosure is useful for a radio communication system.

### Reference Signs List

100 AP
101 Scheduler
102 NDP type controller
103 Common Info generator
104 User Info generator
105 Trigger frame generator
106 Error correction encoder
107 Modulator
108, 201 Radio transmitter and receiver
109, 202 Demodulator
110 NDP Receiver
111, 210 Controller
200 Terminal
203 Error correction decoder
204 Common Info decoder
205 User info decoder
206 NDP type controller
207 NDP generator
208 NDP modulator

## Claims

1. A communication apparatus, comprising:
a control circuit that generates a control signal in which first information indicating a type of a response signal is configured in a first field, and second information according to the first information is configured in a second field; and
a transmission circuit that transmits the control signal.

2. The communication apparatus according to claim 1, wherein:
the response signal is a signal not accompanied by data.

3. The communication apparatus according to claim 2, wherein:
the first information indicates a type of the response signal, the type being selected from multiple types.

4. The communication apparatus according to claim 1, wherein:
the type of the response signal includes application in measurement of communication quality.

5. The communication apparatus according to claim 4, wherein:
the first information indicates that, in a band in which the communication quality is measured, the response signal is allocated in a unit which combines multiple smallest allocation units.

6. The communication apparatus according to claim 4, wherein:
the first information indicates that, in a band in which the communication quality is measured, the response signal is allocated in a smallest allocation unit.

7. The communication apparatus according to claim 4, wherein:
the control circuit,
when configuring the first information indicating application different from the application in measurement of the communication quality in the first field, configures an upper limit of a size of the response signal to a first value, and configures a size less than or equal to the first value in the second field as the second information, and
when configuring the first information indicating the application in measurement of the communication quality in the first field, configures the upper limit of the size of the response signal to a second value greater than the first value, and configures a size less than or equal to the second value in the second field as the second information.

8. The communication apparatus according to claim 4, wherein:
the control circuit,
when configuring the first information indicating application different from the application in measurement of the communication quality in the first field, configures an upper limit of an interval of a frequency to which the response signal is allocated to a first value, and configures an interval less than or equal to the first value in the second field as the second information, and
when configuring the first information indicating the application in measurement of the communication quality in the first field, configures the upper limit of the interval of the frequency to which the response signal is allocated to a second value greater than the first value, and configures an interval less than or equal to the second value in the second field as the second information.

9. The communication apparatus according to claim 1, wherein:
the control circuit configures, to the second field, at least one of a size of the response signal, an interval of a frequency to which the response signal is allocated, a length of a guard interval added to the response signal, and/or a number of repetitions of repeated transmission applied to the response signal.

10. The communication apparatus according to claim 1, wherein:
the control circuit configures, to the second field, at least one of stream information corresponding to an orthogonal sequence applied to the response signal, information related to frequency hopping of the response signal, a tone number for allocating the response signal, and/or a transmission antenna to transmit the response signal.

11. The communication apparatus according to claim 4, wherein:
the type of the response signal includes application in directivity control of uplink or downlink, application in transmission antenna switching, and application in transmission of the response signal using a sequence.

12. A communication method, comprising:
generating a control signal in which first information indicating a type of a response signal is configured in a first field, and second information according to the first information is configured in a second field; and
transmitting the control signal.
